# EUROPEAN PATENT SPECIFICATION

(11) **EP 4 654 707 B1**
(45) Date of publication and mention of the grant of the patent: **28.10.2026**
(21) Application number: 23953319.3
(22) Date of filing: 25.09.2023
(51) Int. Cl.: H04W 72/0446, H04W 74/00, H04W 74/0808

(54) **COMMUNICATION METHOD AND TERMINAL**
KOMMUNIKATIONSVERFAHREN UND ENDGERÄT
PROCÉDÉ DE COMMUNICATION ET TERMINAL

(43) Date of publication of application: 26.11.2025
(73) Proprietor: GUANGDONG OPPO MOBILE TELECOMMUNICATIONS CORP., LTD., Dongguan, Guangdong 523860 (CN)
(72) Inventor: ZHANG, Shichang, Dongguan, Guangdong 523860 (CN)
(74) Representative: Mewburn Ellis LLP
(86) International application number: PCT/CN2023/121120
(87) International publication number: WO 2025/065154

(56) References cited:
- WO-A1-2023/151663
- CN-A- 112 242 882
- CN-A- 114 051 747
- CN-A- 114 467 314
- CN-A- 115 002 787
- CN-A- 115 362 654
- CN-A- 115 669 179
- CN-A- 115 733 592
- CN-A- 115 835 381
- CN-A- 115 915 409
- YOUNGBUM KIM ET AL: "On channel access mehanism for sidelink on FR1 unlicensed spectrum", 3GPP DRAFT; R1-2307677; TYPE DISCUSSION; NR_SL_ENH2-CORE 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Toulouse, FR; 20230821 - 20230825, 11 August 2023 (2023-08-11), XP052436897
- XINGYA SHEN ET AL: "Discussion of channel access mechanism for sidelink in unlicensed spectrum", 3GPP DRAFT; R1-2307761; TYPE DISCUSSION; NR_SL_ENH2-CORE 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Toulouse, FR; 20230821 - 20230825, 11 August 2023 (2023-08-11), XP052436981

## Description

### TECHNICAL FIELD

The disclosure relates to the field of communication, and more particularly, to a communication method and a terminal.

### BACKGROUND

In a sidelink over unlicensed spectrum (SL-U) system, a channel occupancy time (COT) sharing mechanism is supported. After initiating a COT through listen before talk (LBT), a terminal can share the COT with other terminals, and said other terminals access a channel through one of Type 2 LBT modes, thereby improving resource utilization and on the other hand, facilitating channel contention between SL-U terminals. In SL-U, how the terminal shares a COT with other terminals is a technical problem to be solved.

YOUNGBUM KIM ET AL: "On channel access mehanism for sidelink on FR1 unlicensed spectrum", 3GPP DRAFT; R1-2307677, has Proposal 5: For COT sharing, COT sharing information are indicated in 2nd stage SCI format(s). Different SCI fields are applied between the cases when SCI scheduling PSSCH and indicates COT sharing information and when SCI is only used to schedule PSSCH, which can be performed by using different 2nd stage SCI formats or adding indicator field in 1st stage SCI format.

### SUMMARY

Embodiments of the disclosure provide a communication method and a terminal, which can send control information during sidelink (SL) transmission. The invention is set out in the appended set of claims.

Embodiments of the disclosure provide a communication method. The method includes the following. A first terminal sends first control information, where the first control information contains channel occupancy time (COT) sharing information.

Embodiments of the disclosure provide a communication method. The method includes the following. A second terminal receives first control information, where the first control information contains COT sharing information.

Embodiments of the disclosure provide a first terminal. The first terminal includes a transmitting unit. The transmitting unit is configured to send first control information, where the first control information contains COT sharing information.

Embodiments of the disclosure provide a second terminal. The second terminal includes a receiving unit. The receiving unit is configured to receive first control information, where the first control information contains COT sharing information.

Embodiments of the disclosure provide a terminal device. The terminal device includes a transceiver, a processor, and a memory. The memory is configured to store computer programs. The transceiver is configured to communicate with other devices. The processor is configured to invoke and execute computer programs stored in the memory, to cause the terminal device to perform the foregoing communication method.

Embodiments of the disclosure provide a chip. The chip is configured to implement the above communication method. Specifically, the chip includes a processor. The processor is configured to invoke and execute computer programs from a memory, to cause a device equipped with the chip to perform the above communication method.

Embodiments of the disclosure provide a computer-readable storage medium. The computer-readable storage medium is configured to store computer programs which, when executed by a device, are operable with the device to perform the above communication method.

Embodiments of the disclosure provide a computer program product. The computer program product includes computer program instructions which are operable with a computer to perform the above communication method.

Embodiments of the disclosure provide a computer program. The computer program, when executed by a computer, is operable with the computer to perform the above communication method.

In embodiments of the disclosure, the first control information sent by the first terminal contains COT sharing information, so that the terminal can realize sidelink control information (SCI) transmission and/or reception.

### BRIEF DESCRIPTION OF THE DRAWINGS

FIG. 1 is a schematic diagram illustrating slot symbols for sidelink (SL) transmission according to the disclosure.
FIG. 2 is a schematic diagram illustrating a slot structure for a physical sidelink control channel (PSCCH) and a physical sidelink shared channel (PSSCH) according to the disclosure.
FIG. 3 is a schematic diagram illustrating time-domain positions of PSSCH demodulation reference signal (DMRS) symbols according to the disclosure.
FIG. 4 is a schematic diagram illustrating frequency-domain positions of PSSCH DMRS symbols according to the disclosure.
FIG. 5 is a schematic diagram illustrating a PSSCH and PSCCH resource pool according to the disclosure.
FIG. 6 is a schematic diagram illustrating a slot structure for a new radio (NR) system according to the disclosure.
FIG. 7 is a schematic diagram illustrating interlaced resource blocks (IRBs) according to the disclosure.
FIG. 8 is a schematic diagram illustrating RB sets according to the disclosure.
FIG. 9 is a schematic flowchart of a communication method 900 according to an embodiment of the disclosure.
FIG. 10 is a schematic flowchart of a communication method 1000 according to an embodiment of the disclosure.
FIG. 11 is a schematic block diagram of a first terminal 1100 according to an embodiment of the present disclosure.
FIG. 12 is a schematic block diagram of a second terminal 1200 according to an embodiment of the disclosure.
FIG. 13 is a schematic block diagram of a communication device 1300 according to embodiments of the disclosure.
FIG. 14 is a schematic block diagram of a chip 1400 according to embodiments of the disclosure.
FIG. 15 is a schematic block diagram of a communication system 1500 according to embodiments of the disclosure.

### DETAILED DESCRIPTION

The following will describe technical solutions of embodiments of the disclosure with reference to the accompanying drawings in embodiments of the disclosure.

The technical solutions of embodiments of the disclosure are applicable to various communication systems, for example, a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi), a 5^{th}-generation (5G) communication system, or other communication systems, etc.

Generally speaking, a conventional communication system generally supports a limited quantity of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, or vehicle to everything (V2X) communication, etc. Embodiments of the disclosure can also be applied to these communication systems.

In an implementation, the communication system in embodiments of the disclosure can be applied to a carrier aggregation (CA) scenario, or can be applied to a dual connectivity (DC) scenario, or can be applied to a standalone (SA) network deployment scenario.

In an implementation, the communication system in embodiments of the disclosure is applicable to an unlicensed spectrum, and an unlicensed spectrum can be regarded as a shared spectrum. Alternatively, the communication system in embodiments of the disclosure is applicable to a licensed spectrum, and a licensed spectrum can be regarded as a non-shared spectrum.

Various embodiments of the disclosure are described in connection with a network device and a terminal device. The terminal device can also be referred to as a user equipment (UE), an access terminal, a subscriber unit, a subscriber station, a mobile station, a remote station, a remote terminal, a mobile device, a user terminal, a terminal, a wireless communication device, a user agent, or a user device, etc.

The terminal device can be a station (ST) in a WLAN, a cellular radio telephone, a cordless telephone, a session initiation protocol (SIP) telephone, a wireless local loop (WLL) station, a personal digital assistant (PDA), a handheld device or a computing device with wireless communication functions, other processing devices coupled with a wireless modem, an in-vehicle device, a wearable device, and a terminal device in a next-generation communication system, for example, a terminal device in an NR network, or a terminal device in a future evolved public land mobile network (PLMN), etc.

In embodiments of the disclosure, the terminal device can be deployed on land, which includes indoor or outdoor, handheld, wearable, or in-vehicle. The terminal device can also be deployed on water (such as ships, etc.). The terminal device can also be deployed in the air (such as airplanes, balloons, satellites, etc.).

In embodiments of the disclosure, the terminal device can be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, or a wireless terminal device in smart home, etc.

By way of explanation rather than limitation, in embodiments of the disclosure, the terminal device can also be a wearable device. The wearable device can also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the disclosure, the network device can be a device configured to communicate with a mobile device, and the network device can be an access point (AP) in a WLAN, or can be an evolutional Node B (eNB or eNodeB) in LTE, or a relay station or AP, or an in-vehicle device, a wearable device, a network device (gNB) in an NR network, a network device in a future evolved PLMN, or a network device in an NTN, etc.

By way of explanation rather than limitation, in embodiments of the disclosure, the network device can be mobile. For example, the network device can be a mobile device. Optionally, the network device can be a satellite or a balloon base station. For example, the satellite can be a low earth orbit (LEO) satellite, a medium earth orbit (MEO) satellite, a geostationary earth orbit (GEO) satellite, a high elliptical orbit (HEO) satellite, etc. Optionally, the network device can also be a base station deployed on land or water.

In embodiments of the disclosure, the network device serves a cell, and the terminal device communicates with the network device on a transmission resource (for example, a frequency-domain resource or a spectrum resource) for the cell. The cell can be a cell corresponding to the network device (for example, a base station). The cell can belong to a macro base station, or can belong to a base station corresponding to a small cell. The small cell can include: a metro cell, a micro cell, a pico cell, a femto cell, and the like. These small cells are characterized by small coverage and low transmission power and are adapted to provide data transmission service with high-rate.

It should be understood that, the terms "system" and "network" herein are usually used interchangeably throughout this disclosure. The term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship.

It should be understood that, "indication" referred to in embodiments of the disclosure can be a direct indication, can be an indirect indication, or can mean that there is an association relationship. For example, *A* indicates *B* can mean that *A* directly indicates *B,* for instance, *B* can be obtained according to *A;* can mean that *A* indirectly indicates *B,* for instance, *A* indicates *C,* and *B* can be obtained according to *C;* or can mean that that there is an association relationship between *A* and *B.*

In the elaboration of embodiments of the disclosure, the term "correspondence" can mean that there is a direct or indirect correspondence between the two, can mean that there is an association between the two, or can mean a relationship of indicating and indicated or configuring and configured, etc.

In order to facilitate understanding of technical solutions of embodiments of the disclosure, the following will describe the related art of embodiments of the disclosure. The following related art as an optional solutioncan be arbitrarily combined with the technical solutions of embodiments of the disclosure, which shall all belong to the protection scope of embodiments of the disclosure.

### I. Slot structure for new radio sidelink (NR SL)

In an NR-V2X system, a physical sidelink shared channel (PSSCH) and a physical sidelink control channel (PSCCH) associated with the PSSCH are transmitted in the same slot, and a PSCCH occupies two or three time-domain symbols. Time-domain resource allocation in NR-V2X is implemented at a granularity of slot. A starting point and length of time-domain symbols for SL transmission in one slot are configured via a starting symbol position (*sl-startSLsymbols*) and the number of symbols (*sl-lengthSLsymbols*). The last symbol in the symbols is used as a guard period (GP), and a PSSCH and a PSCCH can only occupy the remaining time-domain symbols. However, if a resource for physical sidelink feedback channel (PSFCH) transmission is configured in the slot, a PSSCH and a PSCCH cannot occupy a time-domain symbol used for PSFCH transmission, as well as an automatic gain control (AGC) preceding the symbol and a GP symbol.

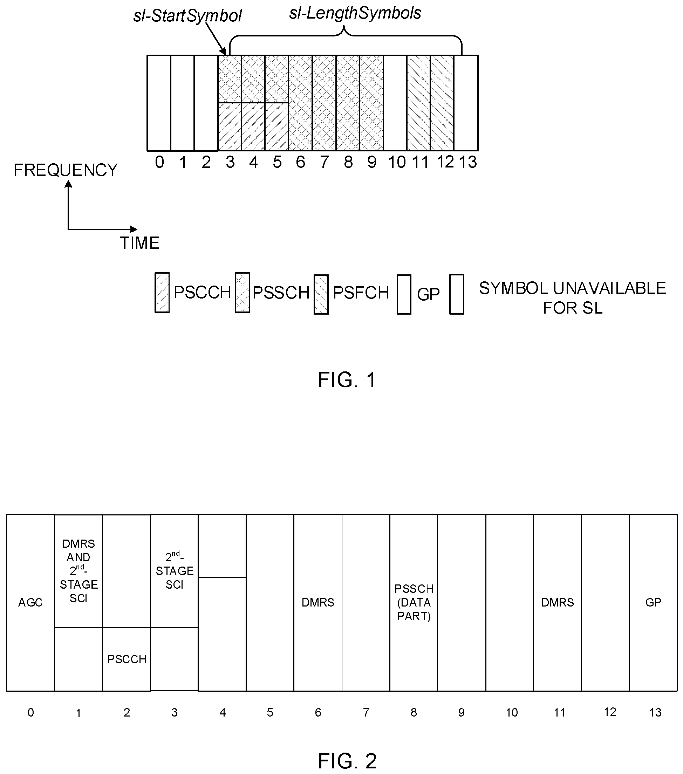

As illustrated in FIG. 1, it is configured by a network that *sl-StartSymbol=3* and *sl-LengthSymbols=11,* that is, 11 time-domain symbols starting from a symbol with an index of 3 in one slot can be used for SL transmission. There is a resource for PSFCH transmission in the slot, and a PSFCH occupies symbol 11 and symbol 12, where symbol 11 is used as an AGC symbol for the PSFCH, and symbol 10 and symbol 13 are used as GPs. Therefore, time-domain symbols that can be used for PSSCH transmission are symbol 3 to symbol 9, where a PSCCH occupies three time-domain symbols, i. e., symbol 3, symbol 4, and symbol 5, and symbol 3 is usually used as an AGC symbol.

In addition to a PSCCH and a PSSCH, there may also be a PSFCH in one SL slot for NR-V2X. In one slot, the 1^{st} orthogonal frequency division multiplexing (OFDM) symbol is fixed for automatic gain control (AGC). On an AGC symbol, a UE can duplicate information sent on the 2^{nd} symbol. The last one symbol in the slot is reserved for Rx-Tx switching, so that the UE can switch from a Tx (or Rx) state to an Rx (or Tx) state. Among the remaining OFDM symbols, a PSCCH can occupy two or three OFDM symbols starting from the 2^{nd} SL symbol. In frequency domain, the number of physical resource blocks (PRBs) occupied by a PSCCH is within one sub-band of a PSSCH. If the number of PRBs occupied by the PSCCH is less than the size of one subchannel of the PSSCH, or a frequency-domain resource for the PSSCH includes multiple subchannels, the PSCCH can be frequency-division multiplexed (FDMed) with the PSSCH on an OFDM symbol where the PSCCH is located.

A PSSCH is used for carrying 2^{nd}-stage sidelink control information (SCI) and an SL shared channel (SL-SCH). Two 2^{nd}-stage SCI formats, namely SCI format 2-A and SCI format 2-B, are defined in the 3^{rd}-generation partnership project (3GPP). SCI format 2-B is applicable to groupcast communication with distance information-based SL hybrid automatic repeat request (HARQ) feedback. SCI format 2-A is applicable to other scenarios, such as unicast, groupcast, and broadcast in which no SL HARQ feedback is required, unicast communication in which SL HARQ feedback is required, and groupcast communication in which an acknowledgement (ACK) or a negative ACK (NACK) needs to be fed back. Another 2^{nd}-stage SCI format, namely, SCI format 2-C, is introduced in 3GPP to indicate a reference resource set and trigger signaling in a specific scenario. A modulation symbol for 2^{nd}-stage SCI is mapped starting from a symbol where the 1^{st} PSSCH demodulation reference signal (DMRS) is located in an order of firstly frequency domain and then time domain, and is multiplexed with a resource element (RE) for a DMRS on the symbol through interleaving. In addition, the modulation symbol for the 2^{nd}-stage SCI cannot be mapped to an RE where a phase tracking-reference signal (PT-RS) is located, as illustrated in FIG. 2.

In an SL communication system, no matter whether a UE performs resource selection autonomously or determines a transmission resource based on SL resource scheduling from the network, different UEs may send PSCCHs on the same time-frequency resource. In order to ensure that an Rx end can at least successfully detect one PSCCH in the case of resource conflict between PSCCHs, a scheme for PSCCH DMRS randomization is adopted in LTE-V2X. Specifically, when sending a PSCCH, the UE can select one value randomly from {0, 3, 6, 9} as a cyclic shift for a DMRS, and if PSCCH DMRSs sent by multiple UEs on the same time-frequency resource apply different cyclic shifts, the Rx UE can still successfully detect at least one PSCCH via an orthogonal DMRS. For the same purpose, in NR-V2X, three PSCCH DMRS frequency-domain orthogonal cover codes (OCCs) are introduced for random selection by a Tx UE, as illustrated in Table 1, where the *i*^{th} bit in an OCC is applied to the *i*^{th} DMRS RE in an RB, thereby distinguishing different UEs.

**Table 1: OCC for PSCCH DMRS**

| OCC index | OCC | | |
|---|---|---|---|
| | *i* = 0 | *i* = 1 | *i = 2* |
| 0 | 1 | 1 | 1 |
| 1 | 1 | *e*^{*j*2/3π} | *e*^{*-j*2/3π} |
| 2 | 1 | *e*^{*-j*2/3π} | *e*^{*j2*/3*π*} |

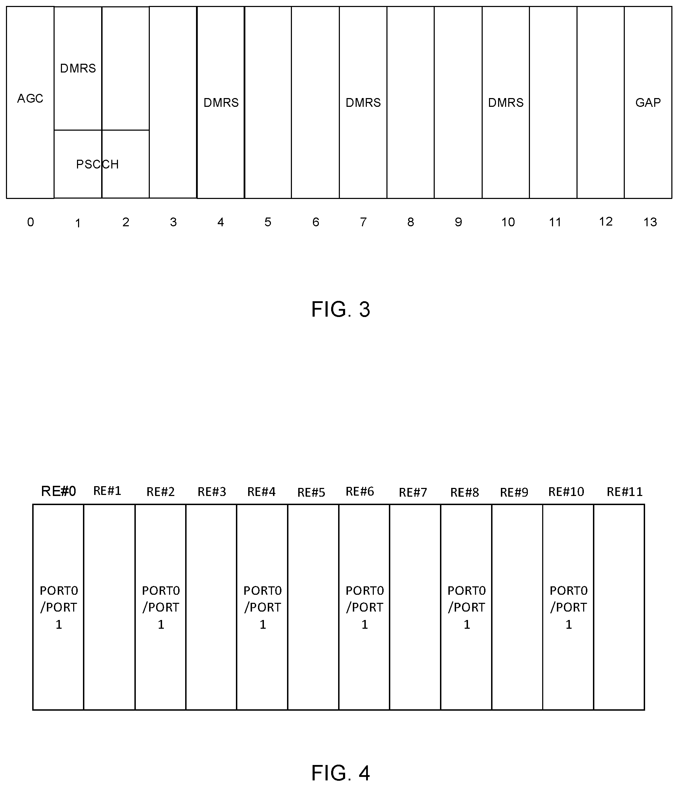

The design of a PSSCH DMRS in an NR-V2X system draws inspiration from the design of an NR UE-universal mobile telecommunication system terrestrial radio access network (UE-UTRAN, Uu) interface, in which multiple time-domain PSSCH DMRS patterns are applied. In a resource pool, the number of available DMRS patterns is related to the number of PSSCH symbols in the resource pool. For a specific number of PSSCH symbols (including the 1^{st} AGC symbol) and a specific number of PSCCH symbols, an available DMRS pattern(s) and a position of each DMRS symbol in the pattern are illustrated in Table 2. FIG. 3 is a schematic diagram illustrating time-domain positions of 4 DMRS symbols when the number of PSSCH symbols is 13.

**Table 2: Numbers and positions of DMRS symbols under different numbers of PSSCH symbols and different numbers of PSCCH symbols**

| Number of PSSCH symbols (including the 1^{st} AGC symbol) | Position of DMRS symbol (relative to position of the 1^{st} AGC symbol) | | | | | |
|---|---|---|---|---|---|---|
| | Number of PSCCH symbols is 2 | | | Number of PSCCH symbols is 3 | | |
| | Number of DMRS symbols | | | Number of DMRS symbols | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 3 | 3, 10 | 1, 6, 11 | 1, 4, 7, 10 | 4, 10 | 1, 6, 11 | 1, 4, 7, 10 |

In some embodiments, if multiple time-domain DMRS patterns are configured for a resource pool, then a time-domain DMRS pattern to be applied is selected by a Tx UE and indicated in 1^{st}-stage SCI. With such design, a UE moving at high speed can select a high-density DMRS pattern, thereby ensuring accuracy of channel estimation. For a UE moving at low speed, a low-density DMRS pattern can be applied, thereby improving spectral efficiency.

The method for generating a PSSCH DMRS sequence is almost the same as the method for generating a PSCCH DMRS sequence, and the difference lies in that in an initialization formula *cᵢₙᵢₜ* for a pseudo-random sequence *c(m),* ${N}_{ID} = {\sum }_{i = 0}^{L - 1} {p}_{i} ⋅ {2}^{L - 1 - i}$, where *pᵢ* is the *i*^{th} bit in a cyclic redundancy check (CRC) for a PSCCH scheduling the PSSCH, and L=24 and is the number bits in the CRC for the PSCCH.

A physical downlink shared channel (PDSCH) and a physical uplink shared channel (PUSCH) in NR each support two frequency-domain DMRS patterns, i. e. DMRS frequency-domain type 1 and DMRS frequency-domain type 2. For each frequency-domain type, there are two different types, i. e. single-symbol DMRS and double-symbol DMRS. Single-symbol DMRS frequency-domain type 1 supports four DMRS ports, and single-symbol DMRS frequency-domain type 2 supports six DMRS ports. In the case of double-symbol DMRS, the number of ports supported is doubled. However, in NR-V2X, since at most two DMRS ports needs to be supported by a PSSCH, only single-symbol DMRS frequency-domain type 1 needs to be supported, as illustrated in FIG. 4.

### II. Determination of frequency-domain resource for NR SL

Similar to LTE-V2X, frequency-domain resources in an NR-V2X resource pool are also consecutive, and the granularity of frequency-domain resource allocation is also subchannel. The number of PRBs in one subchannel is {10, 12, 15, 20, 50, 75, 100}, where the minimum subchannel size is 10 PRBs, which is much larger than the minimum subchannel size of 4 PRBs in LTE-V2X. This is mainly because a frequency-domain resource for a PSCCH in NR-V2X is located within the 1^{st} subchannel of a PSSCH associated with the PSCCH, and the frequency-domain resource for the PSCCH is smaller than or equal to the size of one subchannel of the PSSCH. A time-domain resource for the PSCCH occupies two or three OFDM symbols. If the subchannel size is configured to be small, there will be fewer available resources for the PSCCH, which increases bit error rate, thus degrading detection performance of the PSCCH. In NR-V2X, the size of the subchannel of the PSSCH is configured separately from the size of the frequency-domain resource for the PSCCH, but it is necessary to ensure that the frequency-domain resource for the PSCCH is smaller than or equal to the size of the subchannel of the PSSCH. The following configuration parameters in NR-V2X resource pool configuration information are used for determining frequency-domain resources in a PSCCH and PSSCH resource pool, and examples are as follows:
(1) Subchannel size (*sl-Subchannel Size*): indicates the number of contiguous PRBs in one subchannel in a resource pool, and the value range is {10, 12, 15, 20, 50, 75, 100} PRBs;
(2) The number of subchannels (*st-Num Subchannel*): indicates the number of subchannels in the resource pool;
(3) Index of start RB of subchannel (*sl-Stan RB-Subchannel*): indicates an index of a start PRB of the 1^{st} subchannel in the resource pool;
(4) The number of PRBs (*sl-RB-Number*): indicates the number of contiguous PRBs in the resource pool;
(5) PSCCH frequency-domain resource indicator (*sl-FreqResource PSCCH*): indicates the size of a frequency-domain resource for a PSCCH, and the value range is {10, 12, 15, 20, 25} PRBs.

When the UE determines a resource pool used for PSSCH transmission or PSSCH reception, a frequency-domain resource in the resource pool can be *sl-Num Subchannel* contiguous subchannels starting from a PRB indicated by *sl-Start RB-Subchannel.* If the number of PRBs in the *sl-Num Subchannel* contiguous subchannels is less than the number of PRBs indicated by *sl-RB-Number,* the remaining PRBs cannot be used for PSSCH transmission or PSSCH reception.

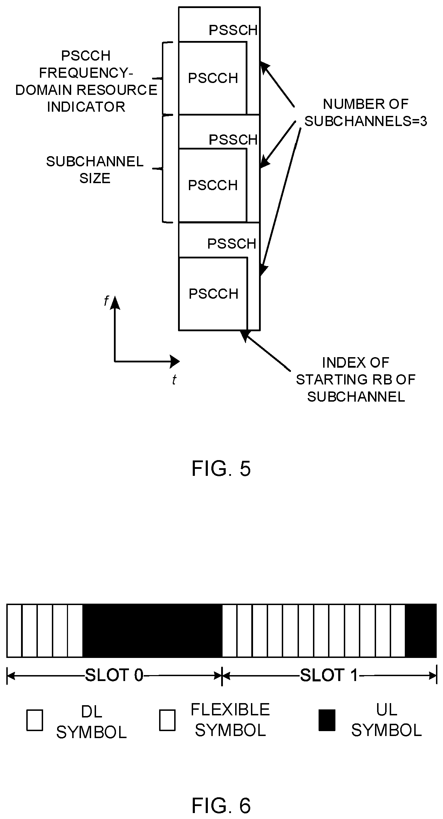

In NR-V2X, a frequency-domain starting position of a PSCCH is aligned with a frequency-domain starting position of the 1^{st} subchannel of a PSSCH associated with the PSCCH, and therefore, a starting position of each PSSCH subchannel is a possible frequency-domain starting position of the PSCCH. A frequency-domain range of a PSCCH and PSSCH resource pool can be determined according to the above parameters, as illustrated in FIG. 5.

Generally, a PSCCH is used for carrying SCI related to resource sensing, which can include one or more of:
priority of scheduled transmission;
frequency-domain resource assignment: indicates the number of frequency-domain resources for a PSSCH scheduled by a PSCCH in a current slot, and the number of frequency-domain resources and a starting position of at most two reserved retransmission resources;
time-domain resource assignment: indicates a time-domain position(s) of at most two retransmission resources;
reference signal pattern for PSSCH;
2^{nd}-stage SCI format;
code-rate offset for 2^{nd}-stage SCI;
the number of PSSCH DMRS ports;
modulation and coding scheme (MCS);
MCS table indicator;
the number of PSFCH symbols;
resource reservation period: used for reserving resources for transmission of another transport block (TB) in the next period, and this information bit field is not present if cross-TB resource reservation is not enabled in a resource pool configuration; or
reserved bits: 2~4 bits, and the specific number of bits is configured by the network or pre-configured.

Since a PSCCH and a scheduled PSSCH are always transmitted in one slot, and a starting position of a PRB(s) occupied by the PSCCH is a starting position of the 1^{st} subchannel of the scheduled PSSCH, a time-frequency starting position of the scheduled PSSCH is not explicitly indicated by SCI format 1-A.

### III. Determination of time-domain resource (slot) for NR SL

In NR-V2X, PSCCH/PSSCH transmission is at a slot level, i. e. only one PSCCH/PSSCH can be transmitted in each slot, and transmission of multiple PSCCHs/PSSCHs within one slot through time-division multiplexing (TDM) is not supported. However, PSCCHs/PSSCHs of different users can be multiplexed within one slot through FDM. A time-domain resource for a PSSCH in NR-V2X is at a granularity of slot. Unlike a PSSCH in LTE-V2X that occupies all time-domain symbols in one subframe, a PSSCH in NR-V2X can occupy only some symbols in one slot. This is mainly because in an LTE system, uplink (UL) or downlink (DL) transmission is performed at a granularity of subframe, and therefore, SL transmission is also performed at a granularity of subframe (a special subframe in a TDD system is not used for SL transmission). However, in an NR system, a flexible slot structure is adopted, that is, a slot includes both an UL symbol and a DL symbol, which is more conducive to flexible scheduling and reducing delay. A subframe for an NR system is illustrated in FIG. 6. A slot can include a DL symbol, an UL symbol, and a flexible symbol. The DL symbol is located at a starting position of the slot, the UL symbol is located at an ending position of the slot, and the flexible symbol is located between the DL symbol and the UL symbol. The number of each type of symbols in each slot is configurable.

An SL transmission system can share a carrier with a cellular system, and in this case, only an UL transmission resource for the cellular system can be used for SL transmission. With regard to NR-V2X, if SL transmission still needs to occupy all time-domain symbols in one slot, a network needs to configure a full-UL slot for SL transmission, which will have great influence on UL and DL data transmission in an NR system, thus reducing system performance. Therefore, NR-V2X supports using only some time-domain symbols in a slot for SL transmission, i. e., some UL symbols in one slot are used for SL transmission. In addition, considering that an AGC symbol and a GP symbol are included in SL transmission, if the number of UL symbols used for SL transmission is small, there will be fewer remaining symbols available for transmitting valid data after the AGC symbol and the GP symbol are excluded, which results in low resource utilization. Therefore, the number of time-domain symbols occupied by SL transmission in NR-V2X is at least 7 (including a GP symbol). When a dedicated carrier is adopted in an SL transmission system, it can avoid sharing a transmission resource with other systems, and all symbols in a slot can be configured for SL transmission.

As described above, in NR-V2X, a starting point and a length of time-domain symbols for SL transmission in one slot can be configured via a starting symbol position (sl-*StartSymbol*) and the number of symbols (*sl-LengthSymbols*). The last symbol in the time-domain symbols for SL transmission is used as a GP, and only the rest of the time-domain symbols can be used for a PSSCH and a PSCCH. However, if a resource for PSFCH transmission is configured in the slot, a PSSCH and a PSCCH cannot occupy a time-domain symbol(s) used for PSFCH transmission, as well as an AGC symbol preceding the symbol and a GP symbol.

In an NR-V2X system, time-domain resources in a resource pool are also indicated via a bitmap. Considering a flexible slot structure in an NR system, the length of a bitmap is also extended, and the range of the length of a bitmap supported is [10:160]. The method for determining a position of a slot belonging to the resource pool within one system frame number (SFN) cycle via a bitmap is the same as that in LTE-V2X, and the difference lies in the following aspects:
The total number of slots in one SFN cycle is 10240 × 2*^{µ}*, where parameter *µ* is related to subcarrier spacing; and
If at least one time-domain symbol in time-domain symbols *Y, Y +* 1, *Y +* 2, ..., *Y* + *X* - 1 in one slot is not configured as an UL symbol via *TDD-UL-DL-ConfigCommon* signaling from the network device, the slot cannot be used for SL transmission, where *Y* denotes *sl-StartSymbol* and and *X* denotes *sl-LengthSymbols.*

The method specifically includes the following steps.

Step 1: a slot that does not belong to the resource pool within the SFN cycle is excluded, which includes a synchronization slot and a slot that cannot be used for SL transmission. The remaining slots are represented as a remaining slot set, which are re-numbered as (*l*₀, *l*₁, ···, *l*_{(10240×2*^{µ}*}-_{*NS*_*_{SSB}*-*NnonSL*}-1₎).

*N*_{*S*_*SSB*} represents the number of synchronization slots in one SFN cycle. The synchronization slot is determined according to a synchronization-related configuration parameter, and is related to a synchronization signal block (SSB) transmission periodicity, the number of SSB transmission resources configured within the periodicity, etc.

*N_{nonSL}* represents the number of slots in one SFN cycle which do not satisfy configuration of a starting point and the number of UL symbols. If at least one time-domain symbol in time-domain symbols *Y, Y +* 1, *Y +* 2, ..., *Y + X -* 1 in one slot is not semi-statically configured as an UL symbol, the slot cannot be used for SL transmission, where *Y* denotes *sl-StartSymbol* and *X* denotes *sl-LengthSymbols.*

Step 2: the number of reserved slots and corresponding time-domain positions are determined.

If the number of the slots in the remaining slot set cannot be evenly divided by the length of a bitmap, the number of reserved slots and the corresponding time-domain positions need to be determined. Specifically, if a slot *lᵣ* (0 ≤ *r* < 10240 × 2*^{µ}* - *N_{S_SSB}* - *N_{nonSL}*) satisfies $r = \left⌊\frac{m ⋅ \left(10240\times {2}^{μ}-{N}_{S _ SSB}-{N}_{nonSL}\right)}{{N}_{reserved}}\right⌋$, the slot is a reserved slot.

*N_{reserved}* = (10240 × 2*^{µ}* - *N_{S_SSB}* - *N_{nonSL}*) *mod L_{bitmap},* which represents the number of reserved slots, where *L_{bitmap}* represents the length of the bitmap. *m* = 0, ... ,*N_{reserved}* - 1.

Step 3: the reserved slot(s) is excluded from the remaining slot set, and the remaining slots are represented as a logical slot set. Slots in the foregoing slot set are all slots available for the resource pool, and slots in the logical slot set are re-numbered as $\left({t}_{0}^{SL},{t}_{1}^{SL},…,{t}_{{T}_{max} - 1}^{SL}\right)$, where *Tₘₐₓ* = 10240 × 2*^{µ}* - *N_{S_SSB}* - *N_{nonSL}* - *N_{reserved}*.

Step 4: a slot belonging to the resource pool in the logical slot set is determined according to the bitmap.

The bitmap in resource-pool configuration information is (*b*₀, *b*₁, ..., *b*_{*Lbitmap*-1}). For a slot ${t}_{k}^{SL} \left(0\leq k<\left(10240\times {2}^{μ}-{N}_{S _ SSB}-{N}_{nonSL}-{N}_{reserved}\right)\right)$ in the logical slot set, if *bₖ,* = 1 is satisfied, the slot is a slot belonging to the resource pool, where *k' = k mod L_{bitmap}.*

Step 5: the slots belonging to the resource pool determined in Step 4 are re-numbered sequentially as $t {′}_{i}^{SL} , i ∈ \left\{0,1,…,T{′}_{max}-1\right\}$, where *T'ₘₐₓ* represents the number of slots in the resource pool.

### IV. 1^{st}-stage SCI and 2^{nd}-stage SCI in NR SL

A two-stage SCI design is supported in NR SL, where 1^{st}-stage SCI for scheduling a PSSCH and/or SL positioning reference signal (PRS) transmission is referred to as SCI format 1-A, and examples of information carried therein are as follows:
1. Priority of scheduled data: 3 bits, where 000 represents priority value 1, 001 represents priority value 2, and so on.
2. Frequency resource assignment: including a frequency resource indicator value (FRIV).

If SCI can indicate a resource for current transmission and one reserved resource for retransmission of a current TB, then the FRIV has $\left⌈{log}_{2}\left(\frac{{N}_{subChannel}^{SL} \left({N}_{subChannel}^{SL}+1\right)}{2}\right)\right⌉$ bits, which indicates a starting subchannel index of the reserved resource and the number of subchannels in the resource for current transmission and the reserved resource.

If SCI can indicate the resource for current transmission and two reserved resources for retransmission of the current TB, then the FRIV has $\left⌈{log}_{2}\left(\frac{{N}_{subChannel}^{SL} \left({N}_{subChannel}^{SL}+1\right) \left(2{N}_{subChannel}^{SL}+1\right)}{6}\right)\right⌉$ bits, which indicates starting subchannel indexes of the two reserved resources and the number of subchannels in the resource for current transmission and the two reserved resources, where ${N}_{Subchannel}^{SL}$ is the number of subchannels in a current resource pool.

3. Time resource assignment: including a time domain resource indicator value (TRIV).

If a PSCCH can indicate a resource for current transmission and one reserved resource for retransmission of a current TB, then the TRIV has 5 bits, which indicates a slot offset for the reserved resource with respect to the resource for current transmission.

If a PSCCH can indicate the resource for current transmission and another two reserved resources for retransmission of the current TB, then the TRIV has 9 bits, which indicates a slot offset for each of the two reserved resources with respect to the resource for current transmission, where the slot offset indicates the number of slots belonging to the current resource pool.

4. Reference signal pattern for PSSCH: $\left⌈{log}_{2} {N}_{pattern}\right⌉$ bits, where *Nₚₐₜₜₑᵣₙ* is the number of DMRS patterns allowed for the current resource pool.

5. 2^{nd}-stage SCI format: 2 bits, where 00 represents SCI format 2-A, 01 represents SCI format 2-B, 10 represents SCI format 2-C, and 11 is reserved for future releases.

6. Code-rate offset for 2^{nd}-stage SCI: 2 bits, where 00 represents the 1^{st} code-rate offset value configured by a radio resource control (RRC) layer, 01 represents the 2^{nd} code-rate offset value configured by the RRC layer, 10 represents the 3^{rd} code-rate offset value configured by the RRC layer, and 11 represents the 4^{th} code-rate offset value configured by the RRC layer.

7. Number of PSSCH DMRS ports: 1 bit, where 0 represents one port (port 1000), and 1 represents 2 ports (ports 1000 and 1001).

8. MCS: 5 bits.

9. MCS table indicator: 0~2 bits, depending on the number of available MCS tables configured for the resource pool.

10. Number of PSFCH symbols: 1 bit if a PSFCH period has 2 or 4 slots; and 0 bit otherwise.

11. Resource reservation period: 4 bits, used for reserving resources for transmission of another TB in the next period, and this information bit field is not present if cross-TB resource reservation is not enabled in a current resource pool configuration.

12. Reserved bits: 2~4 bits, and the specific number of bits is configured by the network or pre-configured. When a resource pool is configured to indicate, via the least significant bit (LSB) in the reserved bits, whether a terminal supports receiving a resource conflict indicator, then the 1^{st} reserved bit is set to "1" if the terminal supports the function; otherwise, the 1^{st} reserved bit is set to "0". The value of each of the rest of the reserved bits is set to "0".

Four 2^{nd}-stage SCI formats are defined in NR SL, namely, SCI format 2-A, SCI format 2-B, SCI format 2-C, and SCI format 2-D.

For example, SCI format 2-A has 35 bits in total and contains the following information:
HARQ process number: 4 bits;
new data indicator (NDI): 1 bit;
redundancy version (RV): 2 bits;
source ID: 8 bits;
destination ID: 16 bits;
HARQ feedback enabled/disabled indicator: 1 bit;
unicast/groupcast/broadcast indicator: 2 bits, where 00 indicates broadcast, 01 indicates groupcast communication in which an ACK or a NACK needs to be fed back, 10 indicates unicast, and 11 indicates groupcast communication in which only NACK needs to be fed back; and
channel state information (CSI) feedback request: 1 bit.

For example, SCI format 2-B has 48 bits in total, and is only used for indicating groupcast service transmission. Compared with SCI format 2-A, SCI format 2-B does not include a unicast/groupcast/broadcast indicator field and a CSI feedback request field, but additionally includes the following two information fields:
zone ID: 12 bits; and
communication range requirement: 4 bits.

For example, SCI format 2-C is used for carrying an inter-UE coordination request or inter-UE coordination information. Information contained in SCI format 2-C includes two parts. A first part is bit fields other than the "unicast/groupcast/broadcast indicator" field in SCI format 2-A.

If an inter-UE coordination request is carried in SCI Format 2-C, then a second part contains the following additional information:
1. Trigger signaling or reference resource set indicator: 1 bit;
2. Priority: 3 bits;
3. The number of subchannels: $\left⌈{log}_{2} {N}_{Sbchannel}^{SL}\right⌉$ bits, where ${N}_{Subchannel}^{SL}$ is the number of subchannels in a current resource pool;
4. Resource reservation period: $\left⌈{log}_{2} {N}_{rsv _ period}\right⌉$ bits if periodic resource reservation is allowed for the current resource pool, where *N_{rsv_period}* is the total number of resource reservation periods configured for the current resource pool; and 0 bit if periodic resource reservation is not allowed for the current resource pool;
5. Resource selection window: $2 \left(10+\left⌈{log}_{2}\left(10⋅{2}^{μ}\right)\right⌉\right)$ bits, which indicates direct frame numbers (DFNs) and slot indexes corresponding to a starting location and an ending location of the resource selection window, and *µ* = 0,1,2,3 is a sub-carrier spacing index; and
6. Resource type: 1 bit if the current resource pool is configured as that the resource type is determined by UE-B; and 0 bit otherwise.

If inter-UE coordination information is carried in SCI format 2-C, then the second part contains the following additional information:
1. Trigger signaling or reference resource set indicator: 1 bit;
2. Two {TRIV, FRIV, reservation period} combinations: 2(*N_{TRIV} + N_{FRIV} + Y*) bits, where *N_{TRIV}* = 9 and ${N}_{FRIV} = \left⌈log 2\left(\frac{{N}_{Subchannel}^{SL} \left({N}_{Subchannel}^{SL}+1\right) \left(2{N}_{Subchannel}^{SL}+1\right)}{6}\right)\right⌉ ⋅ Y = \left⌈{log}_{2} {N}_{rsv _ period}\right⌉$ bits if periodic resource reservation is allowed for the current resource pool; and 0 bit otherwise;
3. Time-domain location of 1^{st} resource: 8 bits, which indicates an offset for the 1^{st} resource in the 2^{nd} TRIV with respect to a reference slot, where the unit is slot, and the value range is 0-255;
4. Reference slot: $10 + \left⌈{log}_{2}\left(10⋅{2}^{μ}\right)\right⌉$ bits, which indicates a DFN and a slot index of the reference slot, and *µ* = 0,1,2,3 is a sub-carrier spacing index; and
5. Frequency-domain location of 1^{st} resource: $2 ⋅ \left⌈{log}_{2}{N}_{Sbchannel}^{SL}\right⌉$ bits, which indicates a frequency-domain starting location of the 1^{st} resource in the 1^{st} TRIV and a frequency-domain starting location of the 1^{st} resource in the 2^{nd} TRIV.

For example, SCI format 2-D indicates SL PRS transmission, and specifically contains the following information:
SL PRS resource ID: $\left⌈{log}_{2} {N}_{SL - PRS}\right⌉$ bits, where *N_{SL-PRS}* represents the number of SL PRS resources configured/preconfigured within one slot in a shared resource pool for an SL PRS and SL communication;
SL PRS request: 1 bit, used for triggering an Rx UE to perform SL PRS transmission;
embedded SCI format: 2 bits, which indicates an embedded SCI format, as illustrated in Table 3; and
embedded SCI format payload: information contained in 2^{nd}-stage SCI indicated by the "embedded SCI format" field.

A correspondence between the value of the "embedded SCI format" field and the "embedded SCI format payload" is illustrated in Table 3:

**Table 3: Correspondence between value of embedded SCI format field and embedded SCI format payload**

| Value of embedded SCI format field | Embedded SCI format |
|---|---|
| 00 | SCI format 2-A |
| 01 | SCI format 2-B |
| 10 | Reserved |
| 11 | Reserved |

### V. SL over unlicensed spectrum (SL-U)

When performing SL transmission over an unlicensed spectrum, SL transmission needs to meet specific regulation requirements, including requirements on minimum occupied channel bandwidth (OCB) and maximum power spectral density (PSD). With regard to requirements on OCB, if a UE uses a channel to perform data transmission, the bandwidth of the channel occupied is not less than 80% of the bandwidth of one channel. With regard to requirements on maximum PSD, a power transmitted by the UE at every 1 megahertz (MHz) cannot exceed 10 decibel-milliwatts (dBm). In order to meet the regulation requirements on OCB and PSD, an interlaced resource block (IRB) structure is employed when performing SL transmission over an unlicensed spectrum. Each IRB consists of N RBs that are discrete in frequency domain, there are totally M RBs in a frequency-band range, and RBs in the *m*^{th} IRB are {*m, M+m,* 2*M+m,* 3*M+m,...*}*.*

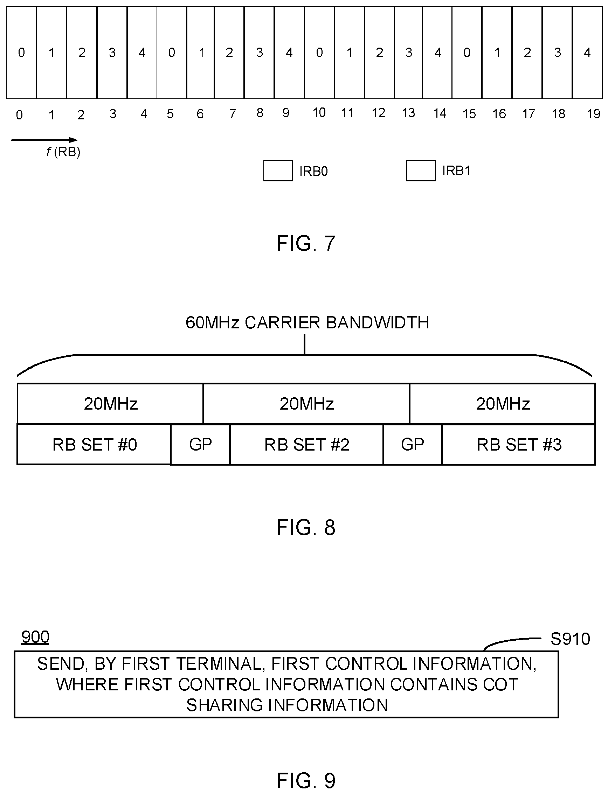

As illustrated in FIG. 7, a system bandwidth includes 20 RBs, which include 5 IRBs (i. e. *M*=5), where each IRB consists of 4 RBs (i. e. *N*=4), and frequency-domain spacings between two adjacent RBs belonging to the same IRB are the same, i. e. 5 RBs. Numbers in boxes in the figure represent IRB indexes. In an SL-U system, if an IRB-based resource allocation granularity is adopted, a PSCCH, a PSSCH, and a PSFCH in the SL-U system should all be based on an IRB structure.

On an unlicensed spectrum, the UE can access a channel through listen before talk (LBT). For LBT, the granularity is 20MHz in frequency domain, and each 20MHz is referred to as one RB set. One carrier can include multiple RB sets with a GP between RB sets, as illustrated in FIG. 8.

In the SL-U system, a channel occupancy time (COT) sharing mechanism similar to that in NR-U is supported. After initiating a COT through LBT, a terminal can share the COT with other terminals, and said other terminals access a channel through one of Type 2 LBT modes, thereby improving resource utilization and on the other hand, facilitating channel contention between SL-U terminals. In order to share the COT with other terminals via indication signaling, the following information fields (hereinafter, "COT sharing information" for short) need to be provided in the indication signaling:
channel access priority class (CAPC): 2 bits, which indicates a CAPC of the terminal initiating the COT;
unicast/groupcast/broadcast indicator: 2 bits;
COT sharing ID information: 24 bits;
remaining COT duration: $\left⌈{log}_{2}\left(10⋅{2}^{μ}\right)\right⌉$ bits, and this field indicates a remaining COT duration that can be attempted after the signaling is received.

On an unlicensed spectrum, the UE firstly needs to perform LBT, and can access a channel only after LBT succeeds, but the time at which the UE completes LBT is not fixed. If there is a restriction that the UE can only perform transmission from a starting position of a slot, the UE may miss transmission opportunity due to failure to complete LBT before the starting position. Therefore, in SL-U, it is considered to add one transmission starting point in a slot, that is, multi-starting point transmission, for example, the additional starting point can be the 3^{rd} or 4^{th} OFDM symbol in the slot.

As can be seen from the foregoing elaborations, four different 2^{nd}-stage SCI formats have been defined in NR SL at present. However, how to indicate COT sharing information in a resource pool in which only SL communication is allowed on an unlicensed spectrum is a problem to be solved.

FIG. 9 is a schematic flowchart of a communication method 900 according to an embodiment of the disclosure. The method can optionally be applied to SL communication on an unlicensed spectrum, but is not limited thereto. The method includes at least some of the following content.

S910, a first terminal sends first control information, where the first control information contains COT sharing information.

The first terminal can send the first control information containing COT sharing information to other terminals, so as to share a COT with other terminals, thereby indicating the COT sharing information to an SL peer terminal in a resource pool in which only SL communication is allowed on an unlicensed spectrum.

In some embodiments, the COT sharing information can include at least one of: a CAPC, a unicast/groupcast/broadcast indicator, COT sharing ID information, or a remaining COT duration.

For example, the CAPC can have 2 bits, which indicates a CAPC of a terminal initiating a COT. The unicast/groupcast/broadcast indicator can have 2 bits, which indicates that a transmission mode is unicast, groupcast, or broadcast. The COT sharing ID information can have 24 bits, which indicates ID information of the COT sharing information. The remaining COT duration can have $\left⌈{log}_{2}\left(10⋅{2}^{μ}\right)\right⌉$ bits, which indicates a remaining COT duration that can be attempted after the signaling is received, where *µ* is a subcarrier spacing index.

The first terminal can further send 1^{st}-stage SCI. The 1^{st}-stage SCI indicates 2^{nd}-stage SCI. For example, the 1^{st}-stage SCI can indicate whether the 2^{nd}-stage SCI contains COT sharing information and/or the format of scheduled 2^{nd}-stage SCI. The 1^{st}-stage SCI can be SCI format 1-A. For example, the first terminal sends 1^{st}-stage SCI and the first control information to a second terminal, where the first control information is 2^{nd}-stage SCI, the 2^{nd}-stage SCI contains COT sharing information, and the 1^{st}-stage SCI indicates the 2^{nd}-stage SCI. The second terminal can receive correctly the 2^{nd}-stage SCI containing COT sharing information according to indication of the 1^{st}-stage SCI received.

In some embodiments, the first control information can include 2^{nd}-stage SCI, for example, includes at least one of: SCI format 2-A, SCI format 2-B, SCI format 2-C, SCI format 2-D, or other newly-defined 2^{nd}-stage SCI formats. For different cases, the disclosure provides multiple different implementations, which are described in detail below.

### Embodiment 1:

In this embodiment, instead of transmitting a new 2^{nd}-stage SCI format, existing 2^{nd}-stage SCI is used to transmit COT sharing information. In order to distinguish 2^{nd}-stage SCI containing COT sharing information from 2^{nd}-stage SCI not containing COT sharing information, 1^{st}-stage SCI can be adopted for indication, that is, the 1^{st}-stage SCI indicates whether the scheduled 2^{nd}-stage SCI contains COT sharing information. The 1^{st}-stage SCI can include SCI format 1-A.

For example, the 1^{st}-stage SCI includes a first information field, where the first information field indicates whether the 2^{nd}-stage SCI contains COT sharing information.

The first information field can be a COT sharing information indicator field. In an example, the first terminal sends 1^{st}-stage SCI, where a COT sharing information indicator field and a "2^{nd}-stage SCI format" field in the 1^{st}-stage SCI can be used for determining the format of scheduled 2^{nd}-stage SCI and whether the scheduled 2^{nd}-stage SCI contains COT sharing information. The 2^{nd}-stage SCI can include at least one of: SCI format 2-A, SCI format 2-B, SCI format 2-C, or SCI format 2-D. As an example, the 2^{nd}-stage SCI includes SCI format 2-A, SCI format 2-B, and SCI format 2-C. Then a correspondence between the value of the "COT sharing information indicator" field, the value of the "2^{nd}-stage SCI format" field, and the 2^{nd}-stage SCI format can be illustrated in Table 4 below.

**Table 4: Correspondence between value of "COT sharing information indicator" field, value of "2^{nd}-stage SCI format" field, and 2^{nd}-stage SCI format**

| Value of "COT sharing information indicator" field | Value of "2^{nd}-stage SCI format" field | 2^{nd}-stage SCI format |
|---|---|---|
| 0 | 00 | SCI format 2-A, not containing COT sharing information |
| 0 | 01 | SCI format 2-B, not containing COT sharing information |
| 0 | 10 | SCI format 2-C, not containing COT sharing information |
| 1 | 00 | SCI format 2-A, containing COT sharing information |
| 1 | 01 | SCI format 2-B, containing COT sharing information |
| 1 | 10 | SCI format 2-C, containing COT sharing information |

The correspondence illustrated in the foregoing Table 4 is only an example, and there is no limitation on the correspondence between different values of the foregoing two fields and the 2^{nd}-stage SCI format in embodiments of the disclosure. For example, when the COT sharing information indicator field has a value of 1, it can indicate that the scheduled 2^{nd}-stage SCI contains COT sharing information; when the COT sharing information indicator field has a value of 0, it can indicate that the scheduled 2^{nd}-stage SCI does not contain COT sharing information; etc. Different values of the 2^{nd}-stage SCI format field indicate the scheduled 2^{nd}-stage SCI formats. The format of the scheduled 2^{nd}-stage SCI and whether the scheduled 2^{nd}-stage SCI contains COT sharing information can be indicated by the COT sharing information indicator field and the 2^{nd}-stage SCI format field.

In this embodiment, for SCI format 1-A transmitted in a resource pool, if the current operation is accompanied with shared spectrum channel access, or a current SL bandwidth part (BWP) is configured with a parameter (*sl- Transmission Structure For PSCCH and PSSCH*) indicating the structure for a PSCCH and a PSSCH, then the SCI format 1-A includes a specific information field (or bit field), to indicate whether 2^{nd}-stage SCI scheduled by the SCI format 1-A contains COT sharing information. The information field can be referred to as a COT sharing information indicator field.

The COT sharing information indicator field can be a newly-added information field in the 1^{st}-stage SCI, or some or all bits in a reserved information field in the 1^{st}-stage SCI.

For example, the COT sharing information indicator field can be one of the following.
(1) Bit field additionally added on the basis of existing bit fields in SCI format 1-A. The bit field has one bit. If the bit field is set to 1, it indicates that the scheduled 2^{nd}-stage SCI contains COT sharing information; and if the bit field is set to 0, it indicates that the scheduled 2^{nd}-stage SCI does not contain COT sharing information. Alternatively, if the bit field is set to 0, it indicates that the scheduled 2^{nd}-stage SCI contains COT sharing information; and if the bit field is set to 1, it indicates that the scheduled 2^{nd}-stage SCI does not contain COT sharing information.
(2) Specific bit in reserved bit field in SCI format 1-A. For example, the 2^{nd} LSB of the reserved bit field. For another example, when a UE is allowed to send SCI in a resource pool to indicate whether resource conflict is supported, i. e. when a higher-layer parameter *sl-IndicationUE-B* is configured to "enabled", the 2^{nd} LSB of the reserved bit field is used; otherwise, the LSB in the reserved bit field is used.

In this embodiment, it can avoid introducing an additional 2^{nd}-stage SCI format, which helps to reduce complexity of terminal implementation.

### Embodiment 2

In this embodiment, COT sharing information is sent via a new 2^{nd}-stage SCI, for example, the COT sharing information can be sent via SCI format 2-E. The first terminal sends the 2^{nd}-stage SCI, where the 2^{nd}-stage SCI carries COT sharing information and information carried in other 2^{nd}-stage SCIs. That is, in this embodiment, the format of 2^{nd}-stage SCI containing COT sharing information can include SCI format 2-E.

For example, the first terminal sends SCI format 2-E, where the SCI format 2-E can contain COT sharing information and information carried in SCI format 2-A, or contain COT sharing information and information carried in SCI format 2-B.

In an example, the 2^{nd}-stage SCI containing COT sharing information includes at least one of the following information fields: a third information field, an embedded SCI format field, an embedded SCI format payload field, or a reserved bit field. The third information field is used for carrying the COT sharing information, and the third information field can also be referred to as a COT sharing information field.

The embedded SCI format field indicates that SCI format 2-A or SCI format 2-B is embedded in the 2^{nd}-stage SCI containing COT sharing information.

For example, the 2^{nd}-stage SCI containing COT sharing information is the SCI format 2-E. Then the UE indicates the COT sharing information and information carried in SCI format 2-A or indicates the COT sharing information and information carried in SCI formats 2-B by sending SCI format 2-E. However, information carried in SCI format 2-C is not sent via SCI format 2-E. Specifically, the following information can be sent via SCI format 2-E. It should be noted that, the order of the following information is not limited in the disclosure.
(1) CAPC: 2 bits, which indicates a CAPC of a terminal initiating a COT.
(2) Unicast/groupcast/broadcast indicator: 2 bits, which indicates that a transmission mode is unicast, groupcast, or broadcast.
(3) COT sharing ID information: 24 bits.
(4) Remaining COT duration: $\left⌈{log}_{2}\left(10⋅{2}^{μ}\right)\right⌉$ bits, which indicates a remaining COT duration that can be attempted after the signaling is received, where *µ* is a subcarrier spacing index.
(5) Embedded SCI format: 2 bits or 1 bit, which indicates the format of SCI embedded in the 2^{nd}-stage SCI containing COT sharing information, as illustrated in Table 5.
(6) Embedded SCI format payload: information contained in 2^{nd}-stage SCI indicated by the "embedded SCI format" field.
(7) Reserved bits: the number of bits is configured by a network or pre-configured, for example, can be configured to have up to 4 bits or 5 bits, which indicates other information. The number of bits in the bit field can be zero or the bit field is not present.

Among the above information, (1)~(4) are COT sharing information, and can be carried in the COT sharing information field.

**Table 5: Correspondence between value of embedded SCI format field and embedded SCI format**

| Value of embedded SCI format field | Embedded SCI format |
|---|---|
| First value, such as 0 or 00 | SCI format 2-A and padding bit(s) (the number of padding bits is configured such that the final length is the same as that when SCI format 2-B is embedded) |
| Second value, such as 1 or 01 | SCI format 2-B |
| Third value, such as 10 | Reserved |
| Fourth value, such as 10 | Reserved |

As illustrated in the foregoing Table 5, in embodiments of the disclosure, the embedded SCI format field in the 2^{nd}-stage SCI containing COT sharing information can have 1 bit or 2 bits, to indicate whether SCI embedded in the 2^{nd}-stage SCI containing COT sharing information is SCI format 2-A or is SCI format 2-B. There is no limitation on content indicated by each value of the embedded SCI format field in embodiments of the disclosure. For example, when the embedded SCI format field has 1 bit, if the embedded SCI format field has a value of 0, it can indicate that SCI field 2-A is embedded in the 2^{nd}-stage SCI containing COT sharing information; and if the embedded SCI format field has a value of 1, it can indicate that SCI format 2-B is embedded in the 2^{nd}-stage SCI including COT sharing information. Alternatively, if the embedded SCI format field has a value of 1, it can indicate that SCI format 2-A is embedded in the 2^{nd}-stage SCI containing COT sharing information; and if the embedded SCI format field has a value of 0, it can indicate that SCI format 2-B is embedded in the 2^{nd}-stage SCI containing COT sharing information. When the embedded SCI format field has 2 bits, the embedded SCI format field has four values, i. e., 00, 01, 10, and 11. One of these values can be used to indicate that SCI 2-A is embedded in the 2^{nd}-stage SCI containing COT sharing information, another one of these values can be used to indicate that SCI 2-B is embedded in the 2^{nd}-stage SCI containing COT sharing information, and the remaining 2 values are reserved values.

In addition, since the length of SCI format 2-A is shorter than that of SCI format 2-B, and the 2^{nd}-stage SCI containing COT sharing information can contain information carried in SCI format 2-A or can contain information carried in SCI format 2-B, in order to ensure that the length of the 2^{nd}-stage SCI containing COT sharing information remains the same in different cases, information carried in SCI format 2-A and a padding bit(s) can be contained in the embedded SCI format field when the 2^{nd}-stage SCI containing COT sharing information contains information carried in SCI format 2-A, to ensure that the length after padding is the same as the length when the 2^{nd}-stage SCI containing COT sharing information contains SCI format 2-B.

Since a new 2^{nd}-stage SCI format is introduced, i. e. the 2^{nd}-stage SCI containing COT sharing information, in order to indicate different 2^{nd}-stage SCI formats, 1^{st}-stage SCI can be used to indicate the format of the scheduled 2^{nd}-stage SCI in embodiments of the disclosure. The 1^{st}-stage SCI can be SCI format 1-A.

For example, the 1^{st}-stage SCI includes a second information field and/or a 2^{nd}-stage SCI format field, where the second information field and/or the 2^{nd}-stage SCI format field indicates the format of the scheduled 2^{nd}-stage SCI. The second information field can be an additional indicator field, or referred to as an additional format indicator field. This embodiment provides various manners for indicating the format of 2^{nd}-stage SCI.

### Manner 1:

The first terminal sends 1^{st}-stage SCI, where a COT additional indicator field and a "2^{nd}-stage SCI format" field in the 1^{st}-stage SCI can be used for determining the format of scheduled 2^{nd}-stage SCI. For example, the 2^{nd}-stage SCI can include at least one of: SCI format 2-A, SCI format 2-B, SCI format 2-C, SCI format 2-D, or 2^{nd}-stage SCI (e. g., SCI format 2-E) that contains COT sharing information.

In this manner, for SCI format 1-A transmitted in a resource pool, if the current operation is accompanied with shared spectrum channel access, or a current SL BWP is configured with a parameter (*sl-TransmissionStructureForPSCCHandPSSCH*) indicating the structure for a PSCCH and a PSSCH, then the SCI format 1-A includes a specific bit field, which is hereinafter referred to as "additional format indicator" field for short. The format of the scheduled 2^{nd}-stage SCI is indicated by the "additional format indicator" field and the "2^{nd}-stage SCI format" field. The format of the 2^{nd}-stage SCI includes SCI format 2-E. An example of a correspondence between the value of the "additional format indicator" field, the value of the "2^{nd}-stage SCI format" field, and the 2^{nd}-stage SCI format is illustrated in Table 6 below.

**Table 6: Correspondence between value of "additional format indicator" field, value of "2^{nd}-stage SCI format" field, and 2^{nd}-stage SCI format**

| Value of "additional format indicator" field | Value of "2^{nd}-stage SCI format" field | 2^{nd}-stage SCI format" field |
|---|---|---|
| 0 | 00 | SCI format 2-A |
| 0 | 01 | SCI format 2-B |
| 0 | 10 | SCI format 2-C |
| 0 | 11 | SCI format 2-D |
| 1 | 00 | SCI format 2-E |
| 1 | 01 | Reserved |
| 1 | 10 | Reserved |
| 1 | 11 | Reserved |

The correspondence illustrated in the foregoing Table 6 is only an example, and there is no limitation on the correspondence between different values and the 2^{nd}-stage SCI format in embodiments of the disclosure.

The additional indicator field (or referred to as additional format indicator field) can be a newly-added information field in the 1^{st}-stage SCI, or can be some or all bits in a reserved information field in the 1^{st}-stage SCI.

For example, the additional indicator field can be one of the following.
(1) Bit field additionally added on the basis of existing bit fields in SCI format 1-A, where the bit field has 1 bit.
(2) Specific bit in reserved bit field in SCI format 1-A. For example, the 2^{nd} LSB of the reserved bit field. For another example, when a UE is allowed to send SCI in a resource pool to indicate whether resource conflict is supported, i. e. when a higher-layer parameter *sl-IndicationUE-B* is configured to "enabled", the 2^{nd} LSB of the reserved bit field is used; otherwise, the LSB in the reserved bit field is used.

### Manner 2:

The first terminal sends 1^{st}-stage SCI, where a "2^{nd}-stage SCI format" field in the 1^{st}-stage SCI can be used for determining the format of scheduled 2^{nd}-stage SCI. For example, the 2^{nd}-stage SCI can include at least one of: SCI format 2-A, SCI format 2-B, SCI format 2-C, or 2^{nd}-stage SCI (e. g., SCI format 2-E) that contains COT sharing information.

In this manner, for SCI format 1-A transmitted in a resource pool, if the current operation is accompanied with shared spectrum channel access, or a current SL BWP is configured with a parameter (*sl-TransmissionStructureForPSCCHandPSSCH*) indicating the structure for a PSCCH and a PSSCH, then a "2^{nd}-stage SCI format" field in SCI format 1-A indicates SCI format 2-E. An example of indicating the format of the scheduled 2^{nd}-stage SCI via the "2^{nd}-stage SCI format" field is illustrated in Table 7.

**Table 7: Correspondence between value of "2^{nd}-stage SCI format" field and 2^{nd}-stage SCI format**

| Value of "2^{nd}-stage SCI format" field | 2^{nd}-stage SCI format |
|---|---|
| 00 | SCI format 2-A |
| 01 | SCI format 2-B |
| 10 | SCI format 2-C |
| 11 | SCI format 2-E |

The correspondence illustrated in Table 7 is only an example, and there is no limitation on the correspondence between different values of the "2^{nd}-stage SCI format" field and the 2^{nd}-stage SCI format in embodiments of the disclosure.

In this embodiment, the COT sharing information and data transmission information can be indicated by transmitting a new 2^{nd}-stage SCI, thereby reducing the number of 2^{nd}-stage SCIs supported by the UE.

On the basis of the foregoing manner, other extended schemes can also be adopted to indicate COT sharing information. For example, another new 2^{nd}-stage SCI format can be further added to carry COT sharing information and information carried in SCI format 2-C, so that transmission of COT sharing information together with an inter-UE coordination request or inter-UE coordination information can be supported. In an example, a new 2^{nd}-stage SCI format is defined, such as SCI format 2-F, which contains COT sharing information and information carried in SCI format 2-C.

### Embodiment 3:

In this embodiment, at least two new 2^{nd}-stage SCls are defined. The UE sends the new 2^{nd}-stage SCIs which carry COT sharing information and information carried in other 2^{nd}-stage SCIs. For example, the first terminal sends 2^{nd}-stage SCI containing COT sharing information, where the format of the 2^{nd}-stage SCI containing COT sharing information includes SCI format 2-E, SCI format 2-F, or SCI format 2-G.

For example, in this embodiment, at least two new 2^{nd}-stage SCI formats can be defined, such as SCI format 2-E and SCI format 2-F. SCI format 2-E can contain COT sharing information and information carried in SCI format 2-A, and SCI format 2-F can contain COT sharing information and information carried in SCI format 2-B. The UE indicates COT sharing information and information carried in SCI format 2-A by transmitting SCI format 2-E, and indicates COT sharing information and information carried in SCI format 2-B by transmitting SCI format 2-F.

Information carried in SCI format 2-C is not transmitted together with COT sharing information. Alternatively, an additional 2^{nd}-stage SCI format is defined in embodiments of the disclosure, for example, SCI format 2-G, which contains a COT sharing information field and information carried in SCI format 2-C. That is, the UE indicates COT sharing information and information carried in SCI format 2-C by transmitting SCI format 2-G.

In an example, the 2^{nd}-stage SCI containing COT sharing information includes at least one of the following information fields: a third information field or a fourth information field. The third information field is used for carrying the COT sharing information, which can also be referred to as a COT sharing information field. The fourth information field is used for carrying information carried in SCI format 2-A, information carried in SCI format 2-B, or information carried in SCI format 2-C.

For example, if the 2^{nd}-stage SCI containing COT sharing information is SCI format 2-E, SCI format 2-F, or SCI format 2-G (if defined), the following information can be sent via SCI format 2-E, SCI format 2-F, or SCI format 2-G. It should be noted that, the order of the following information is not limited in the disclosure.
(1) CAPC: 2 bits, which indicates a CAPC of a terminal initiating a COT.
(2) Unicast/groupcast/broadcast indicator: 2 bits, which indicates that a transmission mode is unicast, groupcast, or broadcast.
(3) COT sharing ID information: 24 bits.
(4) Remaining COT duration: $\left⌈{log}_{2}\left(10⋅{2}^{μ}\right)\right⌉$ bits, which indicates a remaining COT duration that can be attempted after the signaling is received, where *µ* is a subcarrier spacing index.
(5) Information carried in SCI format 2-A (contained in SCI format 2-E), or information carried in SCI format 2-B (contained in SCI format 2-F), or information carried in SCI format 2-C (contained in the SCI format 2-G).
(6) Reserved bits: the number of bits is configured by a network or pre-configured, for example, can be configured to have up to 4 bits or 5 bits, which indicates other information. The number of bits in the bit field can be zero or the bit field is not present.

Among the foregoing information, (1)~(4) are COT sharing information, and can be carried in the COT sharing information field.

In the above example, three 2^{nd}-stage SCI formats are defined, namely SCI format 2-E, SCI format 2-F, and SCI format 2-G. The three 2^{nd}-stage SCIs each contain COT sharing information, and in addition, the three 2^{nd}-stage SCIs further contain information in SCI format 2-A, SCI format 2-B, and SCI format 2-C respectively. The foregoing content is only an example. In embodiments of the disclosure, there is no limitation on the names of the at least two newly-defined 2^{nd}-stage SCI formats, and there is also no limitation on other 2^{nd}-stage SCIs contained in each of the newly-defined 2^{nd}-stage SCI formats. For example, in embodiments of the disclosure, the newly-defined 2^{nd}-stage SCls can be defined as other formats, and each of the newly-defined 2^{nd}-stage SCI formats can contain any one of SCI format 2-A, SCI format 2-B, or SCI format 2-C.

Since new 2^{nd}-stage SCI formats are added, i. e. 2^{nd}-stage SCIs (e. g. SCI format 2-E, SCI format 2-F, and SCI format 2-G) containing COT sharing information, in order to indicate different 2^{nd}-stage SCI formats, in embodiments of the disclosure, 1^{st}-stage SCI can be used to indicate the format of scheduled 2^{nd}-stage SCI. The 1^{st}-stage SCI can be SCI format 1-A.

For example, the 1^{st}-stage SCI includes a second information field and/or a 2^{nd}-stage SCI format field, where the second information field and/or the 2^{nd}-stage SCI format field indicates the format of the scheduled 2^{nd}-stage SCI. The second information field can be an additional indicator field, or can be referred to as an additional format indicator field.

In an example, the first terminal sends 1^{st}-stage SCI, where a COT additional indicator field and a "2^{nd}-stage SCI format" field in the 1^{st}-stage SCI can be used for determining the format of the scheduled 2^{nd}-stage SCI. For example, the 2^{nd}-stage SCI can include at least one of: SCI format 2-A, SCI format 2-B, SCI format 2-C, SCI format 2-D, SCI format 2-E, SCI format 2-F, or SCI format 2-G.

In this manner, for SCI format 1-A transmitted in a resource pool, if the current operation is accompanied with shared spectrum channel access, or a current SL BWP is configured with a parameter (*sl-TransmissionStructureForPSCCHandPSSCH*) indicating the structure for a PSCCH and a PSSCH, then the SCI format 1-A includes a specific bit field, which is hereinafter referred to as "additional format indicator" field for short. The format of the scheduled 2^{nd}-stage SCI is indicated by the "additional format indicator" field and the "2^{nd}-stage SCI format" field, which includes SCI format 2-E, SCI format 2-F, and SCI format 2-G (if defined). An example of a correspondence between the value of the "additional format indicator" field, the value of the "2^{nd}-stage SCI format" field, and the 2^{nd}-stage SCI format is illustrated in Table 8 below.

An example of indicating the format of the scheduled 2^{nd}-stage SCI via the "additional format indicator" field and the "2^{nd}-stage SCI format" field is illustrated in Table 8.

**Table 8: Correspondence between value of "additional format indicator" field, value of "2^{nd}-stage SCI format" field, and 2^{nd}-stage SCI format**

| Value of "additional format indicator" field | Value of "2^{nd}-stage SCI format" field | 2^{nd}-stage SCI format |
|---|---|---|
| 0 | 00 | SCI format 2-A |
| 0 | 01 | SCI format 2-B |
| 0 | 10 | SCI format 2-C |
| 0 | 11 | SCI format2-D |
| 1 | 00 | SCI format 2-E |
| 1 | 01 | SCI format 2-F |
| 1 | 10 | SCI format 2-G if defined; otherwise, reserved |
| 1 | 11 | Reserved |

The correspondence illustrated in the foregoing Table 8 is only an example, and there is no limitation on the correspondence between different values and the 2^{nd}-stage SCI format in embodiments of the disclosure.

The additional indicator field (or referred to as additional format indicator field) can be a newly-added information field in the 1^{st}-stage SCI, or some or all bits in a reserved information field in the 1^{st}-stage SCI.

For example, the additional indicator field can be one of the following.
(1) Bit field additionally added on the basis of existing bit fields in SCI format 1-A, where the bit field has 1 bit.
(2) Specific bit in reserved bit field in SCI format 1-A. For example, the 2^{nd} LSB of the reserved bit field. For another example, when a UE is allowed to send SCI in a resource pool to indicate whether resource conflict is supported, i. e. when a higher-layer parameter *sl-IndicationUE-B* is configured to "enabled", the 2^{nd} LSB of the reserved bit field is used; otherwise, the LSB in the reserved bit field is used.

In this embodiment, since different 2^{nd}-stage SCls are defined to contain respectively information carried in SCI format 2-B and information carried in SCI format 2-A, padding bits are not needed if COT sharing information is transmitted together with SCI format 2-A.

### Embodiment 4:

In this embodiment, COT sharing information is sent via SCI format 2-C. The resource pool is configured such that SCI format 2-C can carry COT sharing information and SCI format 2-B.

In an example, SCI format 2-C contains COT sharing information and information carried in SCI format 2-A, or SCI format 2-C contains COT sharing information and information carried in SCI format 2-B.

In this embodiment, COT sharing information is transmitted together with information carried in SCI format 2-A or information carried in SCI format 2-B. For example, when transmitting COT sharing information, the UE indicates the 2^{nd}-stage SCI format to be transmitted as SCI format 2-C, sets the value of a trigger signaling or reference resource set indicator (providing/requesting indicator) field in the SCI format 2-C to be 1 to indicate that the SCI format 2-C is trigger signaling, sets at least one of the last two bits to be "1" to distinguish from SCI format 2-C used for carrying an inter-UE coordination request, and indicates whether information carried in SCI format 2-A or in SCI format 2-B is to be transmitted together with COT sharing information. For example, when the LSB has a value of 1, it indicates that information carried in SCI format 2-A is to be transmitted together with COT sharing information, that is, the SCI format 2-C contains COT sharing information and information carried in SCI format 2-A; when the 2^{nd} LSB has a value of 1, it indicates that information carried in SCI format 2-B is to be transmitted together with COT sharing information, that is, SCI format 2-C contains COT sharing information and information carried in SCI format 2-B. A bit field indicating the inter-UE coordination request information carried in the SCI format 2-C can be used to carry COT sharing information and other information indicating data transmission.

In an example, SCI format 2-C include at least one of the following information fields: a third information field or a fifth information field. The third information field is used for carrying COT sharing information. The fifth information field indicates that data scheduled by the 2^{nd}-stage SCI is unicast, multicast, or broadcast.

In an example, if COT sharing information is to be transmitted together with information carried in SCI format 2-A, then the positions, the numbers of bits, and the bit field values of some specific fields in SCI format 2-C can be determined as follows:
(1) The 1^{st} bit field is a HARQ process number, which has 4 bits and indicates a HARQ process number of a TB transmitted.
(2) The 2^{nd} bit field is an NDI, which has 1 bit and indicates whether the TB transmitted is a new transmission or is a retransmission of a previous TB.
(3) The 3^{rd} bit field is an RV, which has 2 bits and indicates an RV ID of the TB transmitted.
(4) The 4^{th} bit field is a source ID, which has 8 bits and indicates a source ID of a Tx UE.
(5) The 5^{th} bit field is a destination ID, which has 16 bits and indicates an ID of a destination UE.
(6) The 6^{th} bit field is a HARQ feedback enabled/disabled indicator, which has 1 bit and indicates whether HARQ feedback is required for a TB currently transmitted.
(7) The 7^{th} bit field is a CSI feedback request, which has 1 bit and is used to trigger an Rx UE to perform CSI feedback.
(8) The 8^{th} bit field is a trigger signaling or reference resource set indicator (providing/requesting indicator), which has 1 bit, and the value of the bit field is set to "1".
(9) The 9^{th} bit field is a unicast/groupcast/broadcast indicator, which has 2 bits and indicates whether data scheduled by 2^{nd}-stage SCI is unicast, groupcast, or broadcast.
(10) The 10^{th} bit field is the COT sharing information, which includes at least one of: a CAPC, a unicast/groupcast/broadcast indicator, COT sharing ID information, or a remaining COT duration. The specific content in the COT sharing information has been introduced above, and is not described herein again.
(11) The LSB: set to "1".

In the foregoing elaborations, the position of the 9^{th} bit field and the position of the 10^{th} bit field can be interchanged, and in addition, the 9^{th} bit field may not be present.

In an example, if COT sharing information is to be transmitted together with information carried in SCI formats 2-B, then the position, the numbers of bits, and the bit field values of some specific fields in SCI format 2-C can be determined as follows:
(1) The 1^{st}~6^{th} bit fields are the same as those for the case where COT sharing information is to be transmitted together with information carried in SCI format 2-A.
(2) The 7^{th} bit field, which has 1 bit, and the value of the bit field is set to be the value of 1 bit in a "zone ID" or "communication range requirement" field to be transmitted, for example, set to be the value of the LSB of the "zone ID" to be transmitted, or set to be the value of the LSB of the "communication range requirement" to be transmitted, or set to be the value of other bits in the "zone ID" or "communication range requirement" field.
(3) The 8^{th} bit field is a trigger signaling or reference resource set indicator (providing/requesting indicator), which has 1 bit, and the value of the bit field is set to "1".
(4) The 9^{th} bit field, which has 15 bits, and the value of the bit field is set to be the values of the remaining bits of the "zone ID" or "communication range requirement" field. For example, if the sum of the length of the "Zone ID" field in SCI format 2-B and the length of the "communication range requirement" field in SCI format 2-B is 16 bits, then 1 bit among the 16 bits can be carried in the 7^{th} bit field, and the remaining 15 bits are carried in the 9^{th} bit field, so as to compress the length of the entire SCI format 2-C.
(5) The 10^{th} bit field is the COT sharing information, which includes at least one of: a CAPC, a unicast/groupcast/broadcast indicator, COT sharing ID information, or a remaining COT duration. The specific content in the COT sharing information has been introduced above, and is not described herein again.
(6) 2^{nd} LSB: set to "1".

In this embodiment, the UE does not expect the number of bits in SCI format 2-C to be less than the number of bits required to transmit COT sharing information together with information carried in SCI formats 2-B. In other words, if the number of bits in SCI format 2-C is less than the number of bits required to transmit COT sharing information together with information carried in SCI format 2-B, the UE does not transmit COT sharing information together with information carried in SCI format 2-B, i. e., only transmits COT sharing information together with information carried in SCI format 2-A.

In this embodiment, there is no need to add a bit field in SCI format 1-A or change the manner for setting existing bit fields, which helps to reduce complexity of 1^{st}-stage SCI transmission or reception by the UE.

The communication method in embodiments of the disclosure is a method for COT sharing information. With the method in embodiments of the disclosure, a terminal device can realize SCI transmission and/or reception.

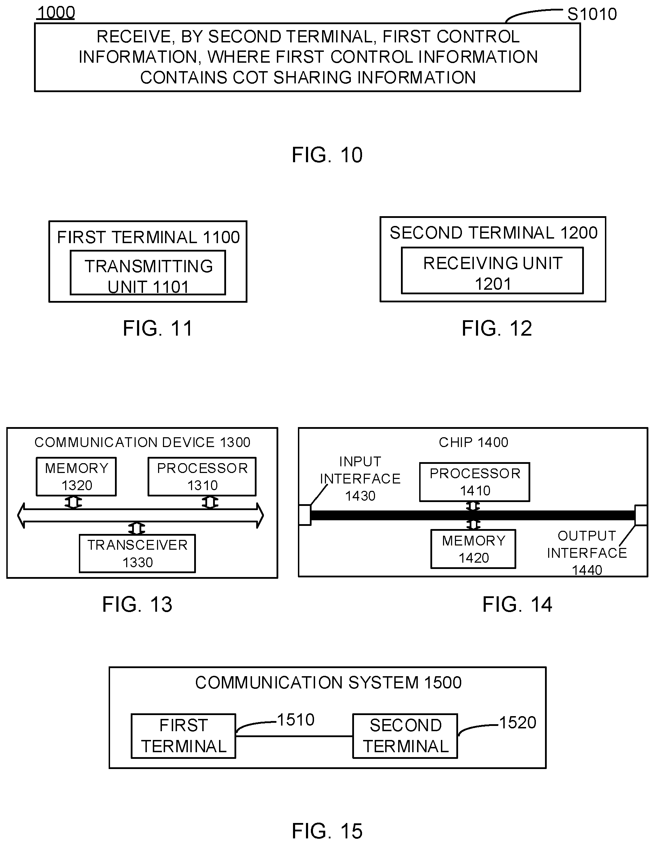

Embodiments of the disclosure further provide a communication method. FIG. 10 is a schematic flowchart of a communication method 1000 according to an embodiment of the disclosure. The method includes at least some of the following content.

S1010, a second terminal receives first control information, where the first control information contains COT sharing information.

In some embodiments the first control information includes 2^{nd}-stage SCI.

In some embodiments, the method further includes the following. The second terminal receives the 1st-stage SCI, where the 1^{st}-stage SCI indicates whether the 2^{nd}-stage SCI contains COT sharing information.

In some embodiments, the 1^{st}-stage SCI includes a first information field, and the first information field indicates whether the 2^{nd}-stage SCI contains COT sharing information and/or a format of scheduled 2^{nd}-stage SCI.

In some embodiments, the first information field is a COT sharing information indicator field.

In some embodiments, the COT sharing information indicator field includes: a newly-added information field in the 1^{st}-stage SCI; or some or all bits in a reserved information field in the 1^{st}-stage SCI.

In some embodiments, a format of the 2^{nd}-stage SCI includes at least one of: SCI format 2-A, SCI format 2-B, SCI format 2-C, or SCI format 2-D.

In some embodiments, the 1^{st}-stage SCI includes a second information field and/or a 2^{nd}-stage SCI format field, and the second information field and/or the 2^{nd}-stage SCI format field indicates the format of the scheduled 2^{nd}-stage SCI.

In some embodiments, the second information field is an additional indicator field.

In some embodiments, the additional indicator field includes: a newly-added information field in the 1^{st}-stage SCI; or some or all bits in a reserved information field in the 1^{st}-stage SCI.

In some embodiments, a format of 2^{nd}-stage SCI containing COT sharing information includes SCI format 2-E.

In some embodiments, the 2^{nd}-stage SCI containing COT sharing information includes at least one of: a third information field, where the third information field is used for carrying the COT sharing information; an embedded SCI format field; an embedded SCI format payload field; or a reserved bit field.

In some embodiments, the embedded SCI format field indicates that SCI format 2-A or SCI format 2-B is embedded in the 2^{nd}-stage SCI containing COT sharing information.

In some embodiments, a format of 2^{nd}-stage SCI containing COT sharing information includes SCI format 2-E, SCI format 2-F, or SCI format 2-G.

In some embodiments, the 2^{nd}-stage SCI containing COT sharing information includes at least one of: a third information field, where the third information field is used for carrying the COT sharing information; or a fourth information field, where the fourth information field is used for carrying information carried in SCI format 2-A, information carried in SCI format 2-B, or information carried in SCI format 2-C.

In some embodiments, the 1^{st}-stage SCI includes SCI format 1-A.

In some embodiments, a format of the 2^{nd}-stage SCI includes SCI format 2-C.

In some embodiments, the SCI format 2-C contains COT sharing information and information carried in SCI format 2-A; or the SCI format 2-C contains COT sharing information and information carried in SCI format 2-B.

In some embodiments, the SCI format 2-C include at least one of the following information fields: a third information field, where the third information field is used for carrying the COT sharing information; or a fifth information field, where the fifth information field indicates that data scheduled by the 2^{nd}-stage SCI is unicast, multicast, or broadcast.

In some embodiments, the COT sharing information includes at least one of: a CAPC; a unicast/multicast/broadcast indicator; a COT sharing ID information; or a remaining COT duration.

For the specific example of performing the method 1000 by the second terminal in this embodiment, reference can be made to the related elaborations of the second terminal in the foregoing method 900, which is not described herein again for brevity.

FIG. 11 is a schematic block diagram of a first terminal 1100 according to an embodiment of the present disclosure. The first terminal 1100 can include a transmitting unit 1101. The transmitting unit 1101 is configured to send first control information, where the first control information contains COT sharing information.

In some embodiments the first control information includes 2^{nd}-stage SCI.

In some embodiments, the transmitting unit 1101 is further configured to send 1^{st}-stage SCI, where the 1^{st}-stage SCI indicates whether the 2^{nd}-stage SCI contains COT sharing information and/or a format of scheduled 2^{nd}-stage SCI.

In some embodiments, the 1^{st}-stage SCI includes a first information field, and the first information field indicates whether the 2^{nd}-stage SCI contains COT sharing information.

In some embodiments, the first information field is a COT sharing information indicator field.

In some embodiments, the COT sharing information indicator field includes: a newly-added information field in the 1^{st}-stage SCI; or some or all bits in a reserved information field in the 1^{st}-stage SCI.

In some embodiments, a format of the 2^{nd}-stage SCI includes at least one of: SCI format 2-A, SCI format 2-B, SCI format 2-C, or SCI format 2-D.

In some embodiments, the 1^{st}-stage SCI includes a second information field and/or a 2^{nd}-stage SCI format field, and the second information field and/or the 2^{nd}-stage SCI format field indicates the format of the scheduled 2^{nd}-stage SCI.

In some embodiments, the second information field is an additional indicator field.

In some embodiments, the additional indicator field includes: a newly-added information field in the 1^{st}-stage SCI; or some or all bits in a reserved information field in the 1^{st}-stage SCI.

In some embodiments, a format of 2^{nd}-stage SCI containing COT sharing information includes SCI format 2-E.

In some embodiments, the 2^{nd}-stage SCI containing COT sharing information includes at least one of: a third information field, where the third information field is used for carrying the COT sharing information; an embedded SCI format field; an embedded SCI format payload field; or a reserved bit field.

In some embodiments, the embedded SCI format field indicates that SCI format 2-A or SCI format 2-B is embedded in the 2^{nd}-stage SCI containing COT sharing information.

In some embodiments, a format of 2^{nd}-stage SCI containing COT sharing information includes at least one of: SCI format 2-E, SCI format 2-F, or SCI format 2-G.

In some embodiments, the 2^{nd}-stage SCI containing COT sharing information includes at least one of: a third information field, where the third information field is used for carrying the COT sharing information; or a fourth information field, where the fourth information field is used for carrying information carried in SCI format 2-A, information carried in SCI format 2-B, or information carried in SCI format 2-C.

In some embodiments, the 1^{st}-stage SCI includes the SCI format 1-A.

In some embodiments, a format of the 2^{nd}-stage SCI includes SCI format 2-C.

In some embodiments, the SCI format 2-C contains COT sharing information and information carried in SCI format 2-A; or the SCI format 2-C contains COT sharing information and information carried in SCI format 2-B.

In some embodiments, the SCI format 2-C include at least one of the following information fields: a third information field, where the third information field is used for carrying the COT sharing information; or a fifth information field, where the fifth information field indicates that data scheduled by the 2^{nd}-stage SCI is unicast, multicast, or broadcast.

In some embodiments, the COT sharing information includes at least one of: a CAPC, a unicast/multicast/broadcast indicator, a COT sharing ID information, or a remaining COT duration.

The first terminal 1100 in the embodiment of the disclosure can implement corresponding functions of the first terminal in the foregoing method embodiments. For a procedure, a function, an implementation, and beneficial effects corresponding to each module (sub-module, unit, component, or the like) in the first terminal 1100, reference can be made to the corresponding elaborations in the foregoing method embodiments, which is not repeatedly described herein. It should be noted that, the foregoing functions of various modules (sub-modules, units, or components) in the first terminal 1100 in the embodiment of the disclosure can be implemented by different modules (sub-modules, units, or components), or can be implemented by the same module (sub-module, unit, or component).

FIG. 12 is a schematic block diagram of a second terminal 1200 according to an embodiment of the disclosure. The second terminal 1200 can include a receiving unit 1201. The receiving unit 1201 is configured to receive first control information, where the first control information contains COT sharing information.

In some embodiments, the first control information includes 2^{nd}-stage SCI.

In some embodiments, the receiving unit 1201 is further configured to receive 1^{st}-stage SCI, where the 1^{st}-stage SCI indicates whether the 2^{nd}-stage SCI contains COT sharing information and/or a format of scheduled 2^{nd}-stage SCI.

In some embodiments, the 1^{st}-stage SCI includes a first information field, and the first information field indicates whether the 2^{nd}-stage SCI contains COT sharing information.

In some embodiments, the first information field is a COT sharing information indicator field.

In some embodiments, the COT sharing information indicator field includes: a newly-added information field in the 1^{st}-stage SCI; or some or all bits in a reserved information field in the 1^{st}-stage SCI.

In some embodiments, a format of the 2^{nd}-stage SCI includes at least one of: SCI format 2-A, SCI format 2-B, SCI format 2-C, or SCI format 2-D.

In some embodiments, the 1^{st}-stage SCI includes a second information field and/or a 2^{nd}-stage SCI format field, and the second information field and/or the 2^{nd}-stage SCI format field indicates the format of the scheduled 2^{nd}-stage SCI.

In some embodiments, the second information field is an additional indicator field.

In some embodiments, the additional indicator field includes: a newly-added information field in the 1^{st}-stage SCI; or some or all bits in a reserved information field in the 1^{st}-stage SCI.

In some embodiments, a format of 2^{nd}-stage SCI containing COT sharing information includes SCI format 2-E.

In some embodiments, the 2^{nd}-stage SCI containing COT sharing information includes at least one of: a third information field, where the third information field is used for carrying the COT sharing information; an embedded SCI format field; an embedded SCI format payload field; or a reserved bit field.

In some embodiments, the embedded SCI format field indicates that SCI format 2-A or SCI format 2-B is embedded in the 2^{nd}-stage SCI containing COT sharing information.

In some embodiments, a format of 2^{nd}-stage SCI containing COT sharing information includes SCI format 2-E, SCI format 2-F, or SCI format 2-G.

In some embodiments, the 2^{nd}-stage SCI containing COT sharing information includes at least one of: a third information field, where the third information field is used for carrying the COT sharing information; or a fourth information field, where the fourth information field is used for carrying information carried in SCI format 2-A, information carried in SCI format 2-B, or information carried in SCI format 2-C.

In some embodiments, the 1^{st}-stage SCI includes SCI format 1-A.

In some embodiments, a format of the 2^{nd}-stage SCI includes SCI format 2-C.

In some embodiments, the SCI format 2-C contains COT sharing information and information carried in SCI format 2-A; or the SCI format 2-C contains COT sharing information and information carried in SCI format 2-B.

In some embodiments, the SCI format 2-C include at least one of the following information fields: a third information field, where the third information field is used for carrying the COT sharing information; or a fifth information field, where the fifth information field indicates that data scheduled by the 2^{nd}-stage SCI is unicast, multicast, or broadcast.

In some embodiments, the COT sharing information includes at least one of: a CAPC, a unicast/multicast/broadcast indicator, a COT sharing ID information, or a remaining COT duration.

The second terminal 1200 in the embodiment of the disclosure can implement corresponding functions of the second terminal in the foregoing method embodiments. For a procedure, a function, an implementation, and beneficial effects corresponding to each module (sub-module, unit, component, or the like) in the second terminal 1200, reference can be made to the corresponding elaborations in the foregoing method embodiments, which is not repeatedly described herein. It should be noted that, the foregoing functions of various modules (sub-modules, units, or components) in the second terminal 1200 in the embodiment of the disclosure can be implemented by different modules (sub-modules, units, or components), or can be implemented by the same module (sub-module, unit, or component).

FIG. 13 is a schematic structural diagram of a communication device 1300 according to embodiments of the disclosure. The communication device 1300 includes a processor 1310. The processor 1310 can invoke and execute computer programs stored in a memory, to cause the communication device 1300 to implement the method in embodiments of the disclosure.

In an implementation, the communication device 1300 can further include a memory 1320. The processor 1310 can invoke and execute computer programs from the memory 1320, to cause the communication device 1300 to implement the method in embodiments of the disclosure.

The memory 1320 can be a separate device independent of the processor 1310, or can be integrated into the processor 1310.

In an implementation, the communication device 1300 can further include a transceiver 1330. The processor 1310 can control the transceiver 1330 to communicate with other devices, and specifically, can send information or data to other devices or receive information or data sent by other devices.

The transceiver 1330 can include a transmitter and a receiver. The transceiver 1330 can further include an antenna, where one or more antennas can be provided.

In an implementation, the communication device 1300 can be a first terminal in embodiments of the disclosure, and the communication device 1300 can implement corresponding processes implemented by the first terminal in various methods in embodiments of the disclosure, which are not described herein again for brevity.

In an implementation, the communication device 1300 can be a second terminal in embodiments of the disclosure, and the communication device 1300 can implement corresponding processes implemented by the second terminal in various methods in embodiments of the disclosure, which are not described herein again for brevity.

FIG. 14 is a schematic structural diagram of a chip 1400 according to embodiments of the present disclosure. The chip 1400 includes a processor 1410. The processor 1410 can invoke and execute computer programs from a memory, to implement the method in embodiments of the present disclosure.

In an embodiment, the chip 1400 can further include a memory 1420. The processor 1410 can invoke and execute computer programs from the memory 1420, so as to implement the method performed by the first terminal or the second terminal in embodiments of the disclosure.

The memory 1420 can be a separate component independent of the processor 1410, or can be integrated into the processor 1410.

In an implementation, the chip 1400 can further include an input interface 1430. The processor 1410 can control the input interface 1430 to communicate with other devices or chips, and specifically, can obtain information or data sent by other devices or chips.

In an implementation, the chip 1400 can further include an output interface 1440. The processor 1410 can control the output interface 1440 to communicate with other devices or chips, and specifically, can output information or data to other devices or chips.

In an implementation, the chip can be applied to a first terminal in embodiments of the disclosure, and the chip can implement corresponding processes implemented by the first terminal in various methods in embodiments of the disclosure, which are not described herein again for brevity.

In an implementation, the chip can be applied to the second terminal in embodiments of the disclosure, and the chip can implement corresponding processes implemented by the second terminal in various methods in embodiments of the disclosure, which are not described herein again for brevity.

The chip applied to the first terminal and the chip applied to the second terminal can be the same chip or different chips.

It should be understood that, the chip mentioned in embodiments of the disclosure can also be referred to as a system-on-chip (SOC), or the like.

The foregoing processor can be a general-purpose processor, a digital signal processor (DSP), a field programmable gate array (FPGA), an application specific integrated circuit (ASIC), or other programmable logic devices, discrete gates or transistor logic devices, discrete hardware components. The general-purpose processor can be a microprocessor, or the processor can be any conventional processor or the like.

The memory mentioned above can be a volatile memory or a non-volatile memory, or can include both the volatile memory and the non-volatile memory. The non-volatile memory may be a read-only memory (ROM), a programmable ROM (PROM), an erasable PROM (EPROM), an electrically EPROM (EEPROM), or flash memory. The volatile memory can be a random access memory (RAM).

It should be understood that, the memory above is intended for illustration rather than limitation. For example, the memory in embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), an synchlink DRAM (SLDRAM), a direct rambus RAM (DR RAM), etc. In other words, the memory in embodiments of the disclosure is intended to include, but is not limited to, these and any other suitable types of memory.

FIG. 15 is a schematic block diagram of a communication system 1500 according to embodiments of the disclosure. The communication system 1500 includes a first terminal 1510 and a second terminal 1520. The first terminal 1510 is configured to send first control information, where the first control information contains COT sharing information. The second terminal 1520 is configured to receive first control information, where the first control information contains COT sharing information.

The first terminal 1510 can be configured to implement corresponding functions implemented by the first terminal in the foregoing method, and the second terminal 1520 can be configured to implement corresponding functions implemented by the second terminal in the foregoing method, which are not described herein again for brevity.

All or some of the above embodiments can be implemented through software, hardware, firmware, or any other combination thereof. When implemented by software, all or some the above embodiments can be implemented in the form of a computer program product. The computer program product includes one or more computer instructions. When the computer instructions are applied and executed on a computer, all or some the operations or functions of the embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

It should be understood that, in various embodiments of the disclosure, the magnitude of a sequence number of each of the foregoing processes does not imply an execution order, and the execution order between the processes should be determined according to function and internal logic thereof, which shall not constitute any limitation to the implementation of embodiments of the disclosure.

It will be evident to those skilled in the art that, for the sake of convenience and brevity, in terms of the specific working processes of the foregoing systems, apparatuses, and units, reference can be made to the corresponding processes in the foregoing method embodiments, which will not be described in detail again herein.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A communication method, comprising:
sending (S910), by a first terminal, first control information, wherein the first control information contains channel occupancy time, COT, sharing information; wherein the first control information comprises 2^{nd}-stage sidelink control information, SCI;
sending, by the first terminal, 1^{st}-stage SCI, wherein the 1^{st}-stage SCI indicates whether the 2^{nd}-stage SCI contains COT sharing information and/or a format of scheduled 2^{nd}-stage SCI; wherein the 1^{st}-stage SCI comprises a first information field, and the first information field indicates whether the 2^{nd}-stage SCI contains COT sharing information; wherein the first information field is a COT sharing information indicator field; wherein the COT sharing information indicator field comprises some or all bits in a reserved information field in the 1^{st}-stage SCI;
wherein the COT sharing information comprises:
a channel access priority class, CAPC;
a unicast/multicast/broadcast indicator;
a COT sharing identity, ID, information; and
a remaining COT duration.

2. The method of claim 1, wherein a format of the 2^{nd}-stage SCI comprises at least one of: SCI format 2-A, SCI format 2-B, SCI format 2-C, or SCI format 2-D.

3. The method of claim 1, wherein the 1^{st}-stage SCI comprises a second information field and/or a 2^{nd}-stage SCI format field, and the second information field and/or the 2^{nd}-stage SCI format field indicates the format of the scheduled 2^{nd}-stage SCI.

4. A communication method, comprising:
receiving (S1010), by a second terminal, first control information, wherein the first control information contains channel occupancy time, COT, sharing information; wherein the first control information comprises 2^{nd}-stage sidelink control information, SCI;
receiving, by the second terminal, 1^{st}-stage SCI, wherein the 1^{st}-stage SCI indicates whether the 2^{nd}-stage SCI contains COT sharing information and/or a format of scheduled 2^{nd}-stage SCI; wherein the 1^{st}-stage SCI comprises a first information field, and the first information field indicates whether the 2^{nd}-stage SCI contains COT sharing information; wherein the first information field is a COT sharing information indicator field; wherein the COT sharing information indicator field comprises some or all bits in a reserved information field in the 1^{st}-stage SCI;
wherein the COT sharing information comprises:
a channel access priority class, CAPC;
a unicast/multicast/broadcast indicator;
a COT sharing identity, ID, information; and
a remaining COT duration.

5. The method of claim 4, wherein a format of the 2^{nd}-stage SCI comprises at least one of: SCI format 2-A, SCI format 2-B, SCI format 2-C, or SCI format 2-D.

6. The method of claim 4, wherein the 1^{st}-stage SCI comprises a second information field and/or a 2^{nd}-stage SCI format field, and the second information field and/or the 2^{nd}-stage SCI format field indicates the format of the scheduled 2^{nd}-stage SCI.

7. A terminal device (1300), comprising:
a transceiver (1330) configured to communicate with other devices;
a memory (1320) configured to store computer programs; and
a processor (1310) configured to invoke and execute computer programs stored in the memory, to cause the terminal device to perform the method of any of claims 1 to 3 or the method of any of claims 4 to 6.

## Patentansprüche

1. Kommunikationsverfahren, umfassend:
Senden (S910), durch ein erstes Endgerät, erster Steuerinformationen, wobei die ersten Steuerinformationen Informationen zur gemeinsamen Nutzung einer Kanalbelegungszeit, COT, enthalten; wobei die ersten Steuerinformationen Sidelink-Steuerinformationen, SCI, einer 2. Stufe umfassen;
Senden, durch das erste Endgerät, von SCI einer 1. Stufe, wobei die SCI einer 1. Stufe anzeigen, ob die SCI einer 2. Stufe Informationen zur gemeinsamen COT-Nutzung und/oder ein Format geplanter SCI einer 2. Stufe enthalten; wobei die SCI einer 1. Stufe ein erstes Informationsfeld umfassen und das erste Informationsfeld anzeigt, ob die SCI einer 2. Stufe Informationen zur gemeinsamen COT-Nutzung enthalten; wobei das erste Informationsfeld ein Anzeigefeld für Informationen zur gemeinsamen COT-Nutzung ist; wobei das Anzeigefeld für Informationen zur gemeinsamen COT-Nutzung einige oder alle Bits in einem reservierten Informationsfeld in den SCI einer 1. Stufe umfasst;
wobei die Informationen zur gemeinsamen COT-Nutzung Folgendes umfassen:
eine Kanalzugriffsprioritätsklasse, CAPC;
eine Unicast-/Multicast-/Broadcast-Anzeige;
Kennungsinformationen, ID-Informationen, zur gemeinsamen COT-Nutzung; und
eine verbleibende COT-Dauer.

2. Verfahren nach Anspruch 1, wobei ein Format der SCI einer 2. Stufe mindestens eines von Folgendem umfasst: SCI-Format 2-A, SCI-Format 2-B, SCI-Format 2-C oder SCI-Format 2-D.

3. Verfahren nach Anspruch 1, wobei die SCI einer 1. Stufe ein zweites Informationsfeld und/oder ein Formatfeld der SCI einer 2. Stufe umfassen und das zweite Informationsfeld und/oder das Formatfeld der SCI einer 2. Stufe das Format der geplanten SCI einer 2. Stufe anzeigt.

4. Kommunikationsverfahren, umfassend:
Empfangen (S1010), durch ein zweites Endgerät, erster Steuerinformationen, wobei die ersten Steuerinformationen Informationen zur gemeinsamen Nutzung einer Kanalbelegungszeit, COT, enthalten; wobei die ersten Steuerinformationen Sidelink-Steuerinformationen, SCI, einer 2. Stufe umfassen;
Empfangen, durch das zweite Endgerät, von SCI einer 1. Stufe, wobei die SCI einer 1. Stufe anzeigen, ob die SCI einer 2. Stufe Informationen zur gemeinsamen COT-Nutzung und/oder ein Format geplanter SCI einer 2. Stufe enthalten; wobei die SCI einer 1. Stufe ein erstes Informationsfeld umfassen und das erste Informationsfeld anzeigt, ob die SCI einer 2. Stufe Informationen zur gemeinsamen COT-Nutzung enthalten; wobei das erste Informationsfeld ein Anzeigefeld für Informationen zur gemeinsamen COT-Nutzung ist; wobei das Anzeigefeld für Informationen zur gemeinsamen COT-Nutzung einige oder alle Bits in einem reservierten Informationsfeld in den SCI einer 1. Stufe umfasst;
wobei die Informationen zur gemeinsamen COT-Nutzung Folgendes umfassen:
eine Kanalzugriffsprioritätsklasse, CAPC;
eine Unicast-/Multicast-/Broadcast-Anzeige;
Kennungsinformationen, ID-Informationen, zur gemeinsamen COT-Nutzung; und
eine verbleibende COT-Dauer.

5. Verfahren nach Anspruch 4, wobei ein Format der SCI einer 2. Stufe mindestens eines von Folgendem umfasst: SCI-Format 2-A, SCI-Format 2-B, SCI-Format 2-C oder SCI-Format 2-D.

6. Verfahren nach Anspruch 4, wobei die SCI einer 1. Stufe ein zweites Informationsfeld und/oder ein Formatfeld der SCI einer 2. Stufe umfassen und das zweite Informationsfeld und/oder das Formatfeld der SCI einer 2. Stufe das Format der geplanten SCI einer 2. Stufe anzeigt.

7. Endgerätevorrichtung (1300), umfassend:
einen Sendeempfänger (1330), der dazu ausgelegt ist, mit anderen Vorrichtungen zu kommunizieren;
einen Speicher (1320), der dazu ausgelegt ist, Computerprogramme zu speichern; und
einen Prozessor (1310), der dazu ausgelegt ist, in dem Speicher gespeicherte Computerprogramme aufzurufen und auszuführen, um zu bewirken, dass die Endgerätevorrichtung das Verfahren nach einem der Ansprüche 1 bis 3 oder das Verfahren nach einem der Ansprüche 4 bis 6 durchführt.

## Revendications

1. Procédé de communication comprenant les étapes suivantes :
envoyer (S910), par un premier terminal, des premières informations de contrôle, les premières informations de contrôle contenant des informations de partage de temps d'occupation de canal, COT ; où les premières informations de contrôle comprennent des informations de contrôle de liaison latérale, SCI, de 2e étage ;
envoyer, par le premier terminal, des SCI de 1er étage, où les SCI de 1er étage indiquent si les SCI de 2e étage contiennent des informations de partage COT et/ou un format de SCI de 2e étage programmées ; où les SCI de 1er étage comprennent un premier champ d'informations et le premier champ d'informations indique si les SCI de 2e étage contiennent des informations de partage COT ; où le premier champ d'informations est un champ indicateur d'informations de partage d'informations COT ; où le champ indicateur d'informations de partage COT comprend une partie ou tous les bits dans un champ d'informations réservé dans les SCI de 1er étage ;
où les informations de partage COT comprennent :
une classe de priorité d'accès au canal, CAPC ;
un indicateur unicast/multicast/broadcast ;
des informations d'identité de partage COT, ID ; et
une durée COT restante.

2. Procédé selon la revendication 1, dans lequel un format des SCI de 2e étage comprend au moins l'un parmi : un format de SCI 2-A, un format de SCI 2-B, un format de SCI 2-C ou un format de SCI 2-D.

3. Procédé selon la revendication 1, dans lequel les SCI de 1er étage comprennent un deuxième champ d'informations et/ou un champ de format de SCI de 2e étage, et le deuxième champ d'informations et/ou le champ de format de SCI de 2e étage indique le format des SCI de 2e étage programmées.

4. Procédé de communication comprenant les étapes suivantes :
recevoir (S1010), par un deuxième terminal, des premières informations de contrôle, les premières informations de contrôle contenant des informations de partage de temps d'occupation de canal, COT ; où les premières informations de contrôle comprennent des informations de contrôle de liaison latérale, SCI, de 2e étage ;
recevoir, par le deuxième terminal, des SCI de 1er étage, où les SCI de 1er étage indiquent si les SCI de 2e étage contiennent des informations de partage COT et/ou un format de SCI de 2e étage programmées ; où les SCI de 1er étage comprennent un premier champ d'informations et le premier champ d'informations indique si les SCI de 2e étage contiennent des informations de partage COT ; où le premier champ d'informations est un champ indicateur d'informations de partage d'informations COT ; où le champ indicateur d'informations de partage COT comprend une partie ou tous les bits dans un champ d'informations réservé dans les SCI de 1er étage ;
où les informations de partage COT comprennent :
une classe de priorité d'accès au canal, CAPC ;
un indicateur unicast/multicast/broadcast ;
des informations d'identité de partage COT, ID ; et
une durée COT restante.

5. Procédé selon la revendication 4, dans lequel un format des SCI de 2e étage comprend au moins l'un parmi : un format de SCI 2-A, un format de SCI 2-B, un format de SCI 2-C ou un format de SCI 2-D.

6. Procédé selon la revendication 4, dans lequel les SCI de 1er étage comprennent un deuxième champ d'informations et/ou un champ de format de SCI de 2e étage, et le deuxième champ d'informations et/ou le champ de format de SCI de 2e étage indique le format des SCI de 2e étage programmées.

7. Dispositif terminal (1300) comprenant :
un émetteur-récepteur (1330) configuré pour communiquer avec d'autres dispositifs ;
une mémoire (1320) configurée pour stocker des programmes informatiques ; et
un processeur (1310) configuré pour appeler et exécuter les programmes informatiques stockés dans la mémoire, pour amener le dispositif terminal à exécuter le procédé selon l'une quelconque des revendications 1 à 3 ou le procédé selon l'une quelconque des revendications 4 à 6.
